# EUROPEAN PATENT APPLICATION

(11) **EP 2 066 083 A1**
(43) Date of publication of application: **03.06.2009**
(21) Application number: 06810261.5
(22) Date of filing: 19.09.2006
(51) Int. Cl.: H04L 12/56

(54) **CONTENT DELIVERY SYSTEM, BANDWIDTH CONTROL INTERMEDIATE DEVICE, AND BANDWIDTH CONTROL METHOD**

(71) Applicant: NEC Corporation, Minato-ku Tokyo 108-8001 (JP)
(72) Inventor: OCHIAI, Katsuhiro, Tokyo 108-8001 (JP); KOBAYASHI, Akira, Tokyo 108-8001 (JP)
(74) Representative: Betten & Resch
(86) International application number: PCT/JP2006/318519
(87) International publication number: WO 2008/035398

(57) **Abstract**

A content distribution system according to the present invention, includes a client terminal, a server, a band control mediating unit provided, between the client terminal and the server, and configured to relay a reproduction control protocol data of a content data from the client terminal to the server, and a first band control unit arranged in a first network and configured to control a band on the first network. The band control mediating unit requests the first band control unit to control the band on the first network for a communication path, through which the content data is transferred, based on the reproduction control protocol data.

## Description

### Technical Field

The present invention relates to a content distribution system, a band control mediating apparatus and a band control method for realizing QoS (quality of service) guaranteed in streaming distribution.

### Background Art

In order to realize a streaming distribution of video data and audio data, a method is conventionally employed in which a sufficient network band is reserved for the distribution and a distributed packet is given a priority and transmitted on a network with priority, compared with other data communications. In particular, as a typical method of reserving the network band, the following two methods are known: a first method of directly reserving a preestimated band on a network prior to the distribution regardless of individual bands required for actual distribution, and a second method of directly instructing a network to reserve a necessary band prior to the distribution from a client terminal or a server. Also, a third method achieved by improving the second method is known, in which a necessary band is acquired by the client terminal or the server through an SIP (Session Initiation Protocol) and reserved prior to the streaming distribution.

The first method has an advantage that a network band is reserved without special consideration to the server and the client terminal. However, it is presumed that distributed video data and audio data always consumes a same bandwidth, and therefore, when a band used by actually distributed video data and audio data is much less than the reserved band, a difference between the reserved band and the used band is wasted.

The second method has an advantage of having no waste because the reserved network band is equal to a used network band. However, special consideration is required in the client terminal or the server to reserve the network band, and an interface portion with the network is required to be disposed in the client terminal and the server and to be adapted to fit to the network, since compatibility is not sufficient. RSVP (Resource reservation Protocol) is known as a method of reserving a band from the client terminal. There is also a method described in Japanese Patent Application Publication (JP-P2003-51846A) which represents a method of reserving a band from the server.

As the second method is known a method described in Japanese Patent Application Publication (JP-P2005-12655A) (Method and system for guaranteeing QoS in CDN through SIP session control, terminal apparatus, content distribution subsystem, SIP session control subsystem, and program). In the Japanese Patent Application Publication (JP-P2005-12655A), SIP is used as a session control protocol between the terminal apparatus and a content distribution subsystem, and an SIP session control subsystem mediates information exchanged by using SIP. Therefore, it is unnecessary for the terminal device and the content distribution subsystem to directly control a band, and it is advantageously sufficient that a standard protocol is installed in the terminal apparatus and the content distribution subsystem. However, the method disclosed in the Japanese Patent Application Publication (JP-P2005-12655A) uses SIP which was originally developed for voice communication and has not been widely disseminated for the purpose of streaming distribution. For this reason, developers of the terminal apparatus and the content distribution subsystem owe a risk of usage of SIP with little precedent. Also, there is a drawback of additional development/operation costs caused by newly providing a function for SIP. Further, in the Japanese Patent Application Publication (JP-P2005-12655A), a band is reserved prior to communication by RTSP (Realtime Streaming Protocol) which is a reproduction control protocol in the content distribution subsystem. Accordingly, in case of the content distribution subsystem which does not correspond to SIP as shown in Japanese Patent Application Publication (JP-P2005-12655A), a band is to be reserved based on band data received from the terminal apparatus. Therefore, there is a drawback in that the reserved band does not necessarily coincide with the band necessary for actual content transmission by the content distribution subsystem.

Related arts related to the network band control are disclosed in Japanese Patent Application Publications (JP-P2000-32048A, JP-P2002-344499A, JP-P2003-258879A and JP-P2004-289627A).

However, these related arts need understanding of a special message for band reservation or band control between a client terminal and a server, in addition to complicated band control procedures. Therefore, the client and the server cannot control a band by using an existing protocol.

### Disclosure of Invention

An object of the present invention is to provide a content distribution system, a band control mediating apparatus and a band control method in which a band control is performed in a network by using an existing protocol.

Another object of the present invention is to provide a content distribution system, a band control mediating apparatus and a band control method, in which a band control can be performed in a network without requiring complicated band control procedures.

Yet another object of the present invention is to provide a content distribution system, a band control mediating apparatus and a band control method, in which a band corresponding to a transferred data amount can be reserved.

The content distribution system according to the present invention includes a client terminal, a server, a band control mediating apparatus and a first band control device. The band control mediating apparatus is arranged between the client terminal and the server, and relays a reproduction control protocol data of content data from the client terminal to the server. The first band control device is arranged in a first network to control a band in the first network. The band control mediating apparatus here requests the first band control device to control the band for a communication path through which content data is transferred, based on the reproduction control protocol data in the first network. In response to this request, the first band control device reserves a band for the communication path.

Furthermore, it is preferable that the server in response to the content data transfer request transmits the network band data required for transferring the content data to the client terminal via the band control mediating apparatus. In this case, the band control mediating apparatus determines a band controlled in the first band control device on the basis of the network band data.

Furthermore, the band control mediating apparatus may be arranged in a first network to which the band control unit belongs. In this case, the band control mediating apparatus requests the band control unit to control the band in the network to which the band control mediating apparatus belongs. Moreover, the content distribution system according to the present invention may further include a second band control unit which controls a band in a second network. In this case, the band control mediating apparatus requests the second band control unit to control the band for a communication path through which content data is transferred, based on the reproduction control protocol data in the second network. At this time, when the band control mediating apparatus is arranged in the first network, it is capable of requesting a band control with respect to the first band control unit and the second band control unit arranged in the first network and the second network, respectively.

The band control mediating apparatus according to the present invention is arranged between the client terminal and the server and includes an I/O interface which relays a reproduction control protocol data of content data from the client terminal to the server, and a CPU for analyzing the reproduction control protocol data and determining a band for the communication path through which the content data is transferred. The CPU transmits a band control request corresponding to the determined band to the first band control unit which controls a band in the first network, via the I/O interface.

Furthermore, it is preferable that the CPU analyzes a network band data required to transfer the content data in response to a content data transfer request to determine a band.

It is further preferable that the CUP analyzes a network band data required to transfer the content data in response to the content data transfer request to specify a network being present on a communication path through which the content data is transferred.

The CPU may further transmit the band control request to the second band control unit which controls the band in the second network.

A band control method according to the present invention includes a band control mediating apparatus arranged between a client terminal and a server relaying a reproduction control protocol data of a content data from the client terminal to the server, the band control mediating apparatus analyzing the reproduction control protocol data and determining a band for a communication path through which the content data is transferred, and the band control mediating apparatus transmitting a band control request corresponding to the band to the first band control unit which controls the band in the first network.

Furthermore, it is preferable that the determining a band includes analyzing a network band data required to transfer the content data in response to the content data transfer request and determining the band.

Furthermore, it is preferable that the transmitting a band control request includes analyzing a network band data required to transfer the content data in response to a content data transfer request, to specify a network on a communication path through which the content data is transferred.

It is further preferable to include the band control mediating apparatus transmitting the band control request to the second band control unit which controls the band in the second network.

The band control method according to the present invention preferably includes, in addition to the above method, the first band control unit reserving a band for the communication path through which content data is transferred in the first network in accordance with the request for band control.

It is further preferable to include the first band control device releasing the band reserved for the communication path through which the content data is transferred, in response to the band control request.

The reproduction control protocol data according to the present invention is preferably the RTSP (Realtime Streaming Protocol) data. In this case, the content data is transferred from the server to the client terminal via the communication path corresponding to an RTP (Realtime Transport Protocol).

As described above, according to the present invention, a control to reserve a band is performed only by the band control mediating apparatus without requiring a complicated band control procedure. Furthermore, the band control is carried out based on a protocol (i.e. RTSP here) which is widely used in the existing streaming reproduction control, whereby the band control mediating apparatus does not need to understand a special protocol and message. The band control mediating apparatus which relays RTSP communication further controls a band in a network, which makes it possible for the client and the server to use an existing protocol and interface.

The present invention further determines the band to reserve in accordance with a streaming distribution request, and thus it is made possible to reserve the band corresponding to the actually transferred content data without having a redundant band.

### Brief Description of Drawings

FIG. 1 is a diagram showing a configuration of a content distribution system according to a first exemplary embodiment of the present invention;
FIG. 2 is a flowchart showing an operation of an RTSP proxy server according to the first exemplary embodiment of the present invention;
FIG. 3A is a sequence diagram showing an operation of reserving a band in the content distribution system according to the first exemplary embodiment of the present invention;
FIG. 3B is a sequence diagram showing an operation of content distribution in the content distribution system according to the first exemplary embodiment of the present invention;
FIG. 4A is a sequence diagram showing an operations of stopping the content distribution in the content distribution system according to the first exemplary embodiment of the present invention;
FIG. 4B is a sequence diagram showing an operation of releasing the band in the content distribution system according to the first exemplary embodiment of the present invention;
FIG. 5 is a diagram showing a configuration of the content distribution system according to a second exemplary embodiment of the present invention;
FIG. 6A is a sequence diagram showing an operation of reserving a band in the content distribution system according to the second exemplary embodiment of the present invention;
FIG. 6B is a sequence diagram showing an operation of content distribute in the content distribution system according to the second exemplary embodiment of the present invention;
FIG. 7 is a sequence diagram showing an operation of stopping the content distribution in the content distribution system according to the second exemplary embodiment of the present invention;
FIG. 8 is a diagram showing a configuration of the content distribution system according to a third exemplary embodiment of the present invention;
FIG. 9A is a sequence diagram showing an operation of reserving a band in the content distribution system according to the third exemplary embodiment of the present invention;
FIG. 9B is a sequence diagram showing an operation of the content distribute in the content distribution system according to the third exemplary embodiment of the present invention;
FIG. 10 is a sequence diagram showing an operation of stopping the content distribution in the content distribution system according to the third exemplary embodiment of the present invention;
FIG. 11 is a diagram showing a configuration of the content distribution system according to a fourth exemplary embodiment of the present invention;
FIG. 12 is a sequence diagram showing an operation of reserving a band in the content distribution system according to the fourth exemplary embodiment of the present invention;
FIG. 13 is a sequence diagram showing an operation of stopping the content distribution in the content distribution system according to the fourth exemplary embodiment of the present invention;
FIG. 14 is a diagram showing a configuration of the content distribution system according to a fifth exemplary embodiment of the present invention;
FIGS. 15A and 15B are a sequence diagram showing an operation of reserving a band in the content distribution system according to the fifth exemplary embodiment of the present invention;
FIG. 15C is a sequence diagram showing an operation of content distribution in the content distribution system according to the fifth exemplary embodiment of the present invention;
FIG. 16 is a sequence diagram showing an operation of stopping the content distribution in the content distribution system according to the fifth exemplary embodiment of the present invention; and
FIGS. 17A and 17B are a sequence diagram showing an operation of releasing the band in the content distribution system according to the fifth exemplary embodiment of the present invention.

### Beat Mode for Carrying Out the Invention

Hereinafter, a content distribution system according to the present invention will be described in detail with reference to the attached drawings. Same or similar reference numbers are allocated to same or similar components in the drawings. The content distribution system performs streaming distribution of video and audio data via a network.

### [First Exemplary Embodiment] ***

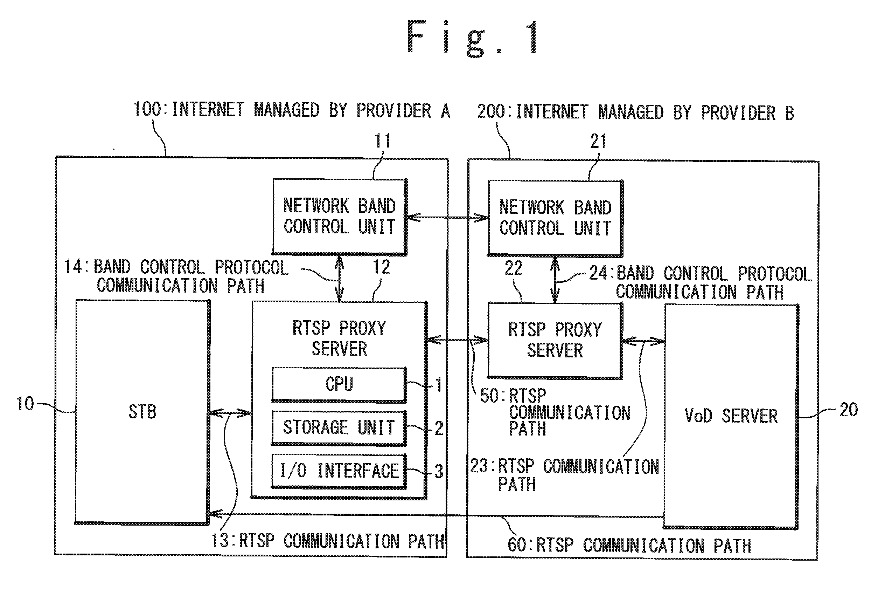

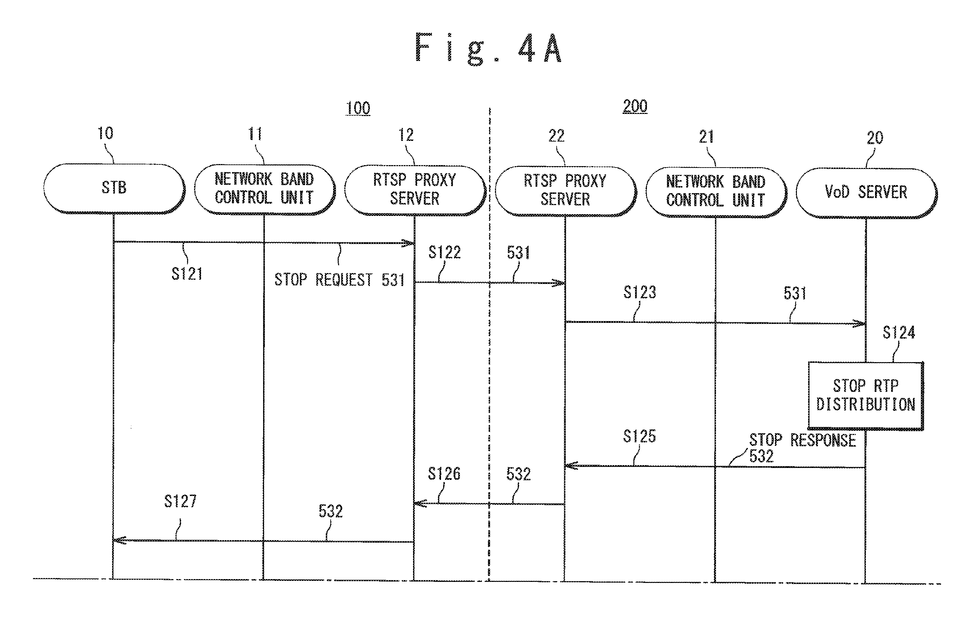

Referring to FIGS. 1 to 4B, a content distribution system according to a first exemplary embodiment of the present invention will be described. The content distribution system according to the first exemplary embodiment includes two networks managed by different providers, in which data is distributed as a stream to a client terminal belonging to one of the networks from a server belonging to the other network.

### (Configuration)

FIG. 1 is a block diagram showing a configuration of the content distribution system according to the first exemplary embodiment. Referring to FIG. 1, the content distribution system in the first exemplary embodiment includes an internet network 100 managed by a provider A (referred to as the internet network 100 hereinafter) and an internet network 200 managed by a provider B (referred to as the internet network 200 hereinafter). The internet network 100 includes an STB 10 which is a client terminal owned by a subscriber, a network band control unit 11 to control a band for a transmission path on the internet network 100, and an RTSP proxy server 12 being a band control mediating unit. Although only one STB 10 is shown here, the internet network 100 may be provided with a plurality of STBs 10 owned by other subscribers.

Furthermore, the internet network 200 includes a VoD server 20 which is owned by a content provider and carries out streaming distribution of data to the STB 10, a network band control unit 21 to control a band for a transmission path on the internet network 200, and an RTSP proxy server 22 as a band control mediating unit (with functions similar to those of the RTSP proxy server 12). Although only one VoD server 20 is shown here, the internet network 200 may be provided with a plurality of VoD servers 20 owned by other content providers.

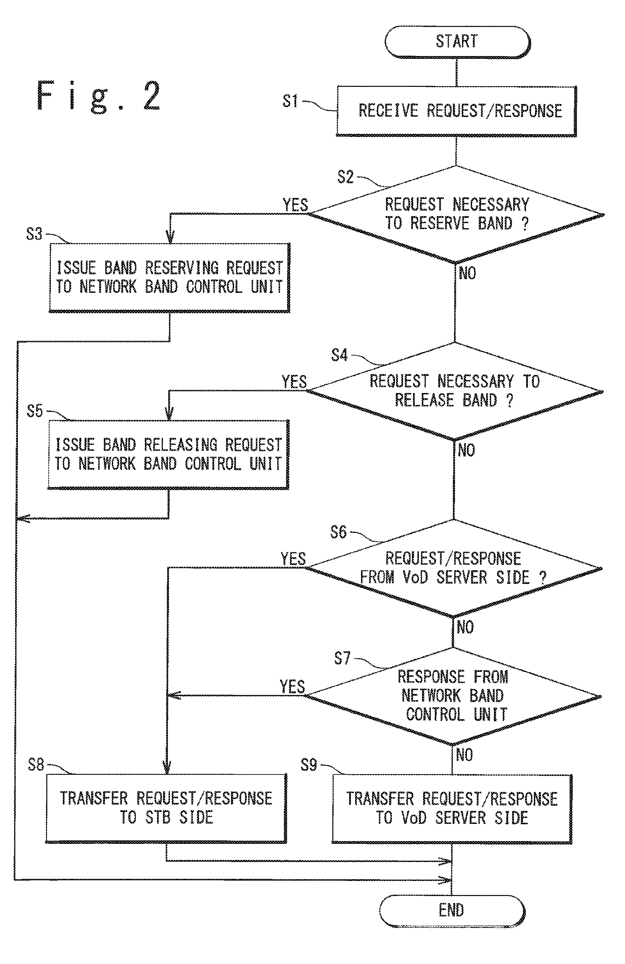

The RTSP proxy server 12 is arranged between the STB 10 and the VoD server 20 and has an RTSP protocol mediating function to transmit/receive data in an RTSP protocol. The RTSP proxy server 12 also controls the network band control unit 11 to execute a band control in place of the STB 10 and the VoD server 20 when data in a protocol requiring the band control passes through the internet network 100, in mediating the data in the RTSP protocol. The RTSP proxy server 22 is similarly arranged between the STB 10 and the VoD Server 20, and controls the network band control unit 21 to execute a band control in place of the STB 10 and the VoD server 20 when data in a protocol requiring the band control passes through the internet network 200. Furthermore, each of the RTSP proxy servers 12 and 22 includes a storage unit 2 which stores a program, a CPU 1 which execute the program to perform an operation shown in FIG. 2, and an interface 3 which controls transmission of various kinds of commands specified by the CPU (i.e. request command and response command) and data (e.g. RTP data). The operation shown in FIG. 2 will be described later.

The STB 10 is connected to the RTSP proxy server 12 via an RTSP communication path 13. The RTSP proxy server 12 and the network band control unit 11 are connected via a band control protocol communication path 14. The RTSP proxy server 12 and the RTSP proxy server 22 are connected via an RTSP communication path 50. The RTSP proxy server 22 and the network band control unit 21 are connected via a band control protocol communication path 24. The RTSP proxy server 22 and the VoD server 20 are connected via an RTSP communication path 23. The VoD server 20 and the STB 10 are connected via an RTP communication path 60. The band control protocol communication path 14 and the RTSP communication path 13 are both communication paths in the internet network 100. Similarly, the band control protocol communication path 24 and the RTSP communication path 23 are both communication paths in the internet network 200. Furthermore, an RTSP communication path 50 and the RTP (Realtime Transport Protocol) communication path 60 are both communication paths to connect the internet network 100 and an internet network 200 managed by different providers.

### (Operations from communication connection to communication disconnection through content distribution in the content distribution system)

Referring to FIGS. 2 to 4B, an operation of the content distribution system according to the first exemplary embodiment of the present invention will be described in detail. Prior to description of the operation, an RTSP protocol and an RTP protocol will be described. The RTSP protocol is a reproduction control protocol of video/audio data as proposed in RFC2326. Content is specified to a server (i.e. VoD server 20 here) in response to a SETUP request 501, and a bit rate data 500 which is a network band data required to reproduce the content is obtained as a response. Next, the reproduction of the content is specified from any portions of the content in response to a PLAY request. In addition, the content in reproduction is stopped in response to a STOP request 531, and completion of a series of controls is declared in response to a TEARDOWN request. Furthermore, the RTP protocol is a protocol proposed in RFC3550 for the purpose of transporting video/audio data, and used for transporting video/audio data in the protocol such as MPEG2, MPEG4 and H.264, onto a payload of the format (i.e. data storage area) in the protocol.

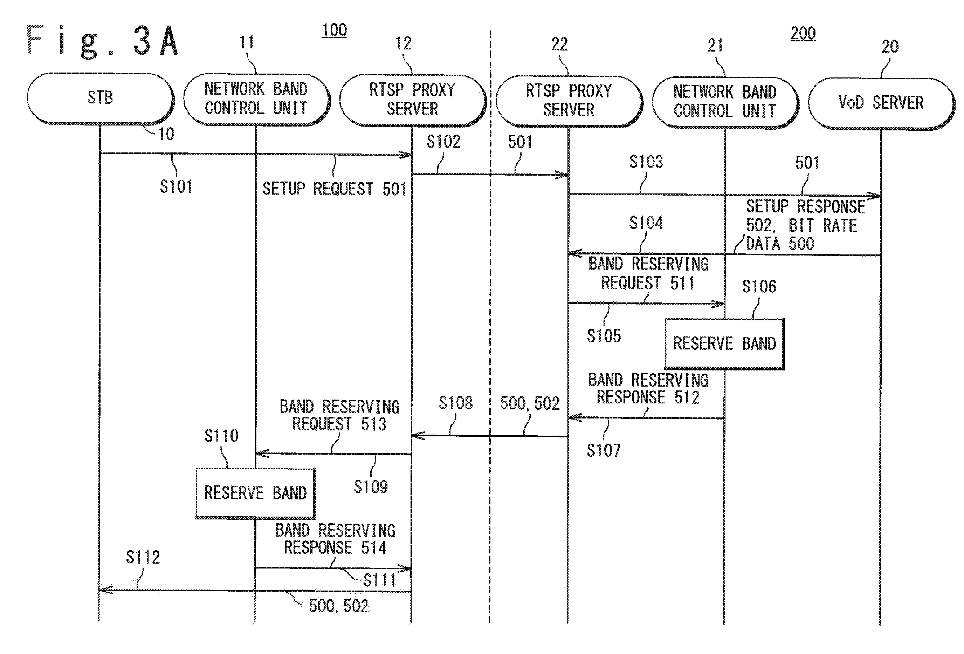

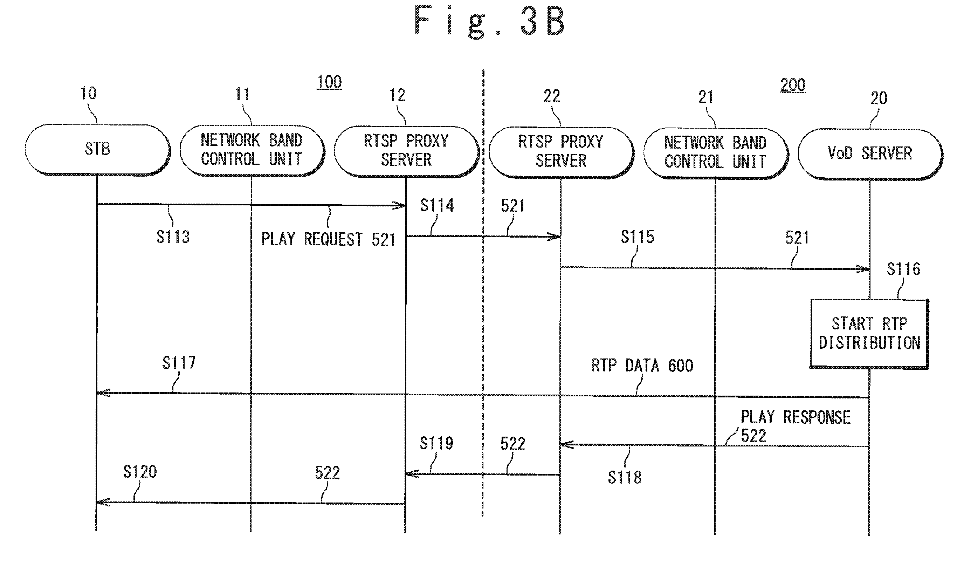

Referring to FIGS. 3A and 3B, a flow from communication line connection to video data/audio data reproduction in the content distribution system according to the present invention will be described. First, the STB 10 selects stream data (i.e. RTP data 600) of contents (i.e. video data/audio data) desired by a subscriber of the STB 10 to reproduce from a portal server (not shown), and obtains identifier data on the VoD server 20 for storing the content, and the content in the VoD server 20.

Next, the STB 10 transmits a SETUP request 501 to the VoD server 20 via the RTSP proxy servers 12 and 22 (steps S101 to S103). Here, the SETUP request 501 includes an identifier data of the VoD server 20 which stores a content data obtained in advance and desired to be reproduced, the content in the VoD server 20, and the STB 10 being a distribution destination of the content.

More specifically, the STB 10 transmits to the RTSP proxy server 12, the SETUP request 501 which specifies content data desired to be reproduced (step S101). The RTSP proxy server 12 transmits the SETUP request 501 to the RTSP proxy server 22 corresponding to an identifier of the VoD server 20 included in the SETUP request 501 (step S102). At the step S102, the RTSP proxy server 12 detects the VoD server 20 as a distribution source of the content data from the STEUP request 501 based on the RTSP protocol. The RTSP proxy server 22 in the internet network 200 to which the VoD server 20 belongs is then determined as a transmission destination of the SETUP request 501. The RTSP proxy server 22 similarly detects the VoD server 20 as a transmission destination from the SETUP request 501 based on the RTSP protocol to transmit the SETUP request 501 to the VoD server 20 (step S103).

In response to the received SETUP request 501, the VoD server 20 transmits a SETUP response 502 and the bit rate data 500 to the STB 10 as a content request source (steps S104 to S112). At this time, the SETUP response 502 and the bit rate data 500 are transmitted to the STB 10 via the RTSP proxy servers 22 and 12. The RTSP proxy servers 22 and 12 control the network control units 21 and 11 to reserve a network band for the RTP communication path 60 in response to the SETUP response 502 and the bit rate data 500.

Details of the operation at the steps S104 to S112 will be described below. In response to the received SETUP request 501, the VoD server 20 transmits the SETUP response 502 and the bit rate data 500 to the RTSP proxy server 22 (step S104). Here, the bit rate data 500 includes network band data required for transmission/reproduction of content requested by the SETUP request 501 and desired to be reproduced.

In response to the received SETUP response 502, the RTSP proxy server 22 extracts a network band data included in the bit rate data 500, and transmits a band reserving request 511 to the network band control unit 21 based on the network band data (step S105). The network band control unit 21 controls a band on the internet network 200 in response to the band reserving request 511 to reserve a network band for the RTP communication path 60 (used for RIP data transmission) used for transmitting the RTP data 600 in the internet network 200 (step S106). After reserving the band, the network band control unit 21 transmits a band reserving response 512 to the RTSP proxy server 22 (step S107).

Upon receiving the band reserving response 512, the RTSP proxy server 22 transmits the SETUP response 502 and the bit rate data 500 to the RTSP proxy server 12 (step S108). The RTSP proxy server 12 extracts the network band data included in the bit rate data 500 based on a band control protocol in response to the received SETUP response 502, and transmits a band reserving request 513 to the network band control unit 11 based on the network band data (step S109). The network band control unit 11 controls a band on the internet network 100 on the basis of the received band reserving request 513, and reserves a network band for the RTP communication path 60 to transmit the RTP data 600 on the internet network 100 (step S110). Furthermore, after reserving the band, the network band control unit 11 transmits a band reserving response 514 to the RTSP proxy server 12 (step S111).

Upon receiving the band reserving response 514, the RTSP proxy server 12 transmits the SETUP response 502 and the bit rate data 500 to the STB 10 (step S112).

Next, referring to FIG. 3B, the STB 10 which has confirmed a band reserved for the RTP communication path 60 by the SETUP response 502 transmits a PLAY request 521 to the VoD server 20 via the RTSP proxy servers 12 and 22 for streaming reproduction of the target content data (steps S113 to S115). Here, the PLAY request 521 includes an identifier data on the VoD server 20 which stores content data desired to be reproduced, and the content of the VoD server 20.

More specifically, the STB 10 transmits to the RTSP proxy server 12 the PLAY request 521 which specifies content data desired to be reproduced (step S113). The RTSP proxy server 12 transmits the PLAY request 521 to the RTSP proxy server 22 corresponding to an identifier of the VoD server 20 included in the PLAY request 521 (step S114). AT the step S114, the RTSP proxy server 12 detects the VoD server 20 as a distribution source of content data based on an RTSP protocol in response to the PLAY request 521. The RTSP proxy server 22 in the internet network 200 to which the VoD server 20 belongs is then determined as a transmission destination of the PLAY request 521. Similarly, the RTSP proxy server 22 detects the VoD server 20 as a transmission destination based on the RTSP protocol in response to the PLAY request 521 to transmit the PLAY request 521 to the VoD server 20 (step S115).

Upon receiving the PLAY request 521, the VoD server 20 starts RTP distribution of video data/audio data of the content specified in the PLAY request 521 by using the RTP communication path 60 which has a reserved band (step S116). Thereafter, a video/audio data stream (i.e. RTP data 600) of the content requested by the PLAY request 521 is transmitted on the RTP communication path 60 until receiving a protocol data for changing the reproduced content such as a STOP request 531, or reaching a tail end of the RTP data 600 (step 117). The VoD server 20 transmits a PLAY response 522 to the STB 10 via the RTSP proxy servers 22 and 12 in the RTP distribution (steps S118 to S120).

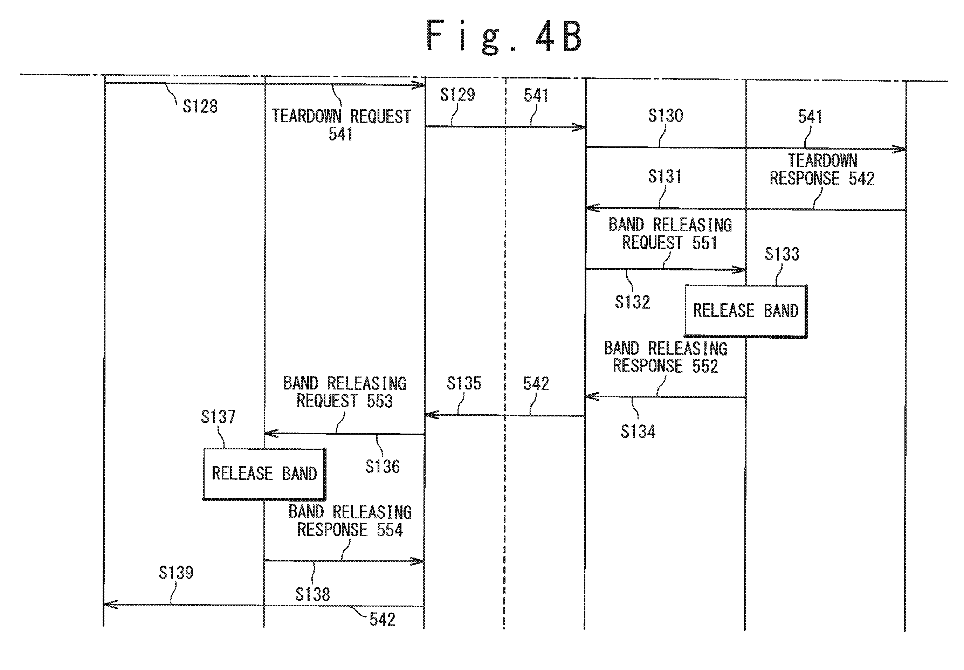

Next, referring to FIGS. 4A and 4B, an operation of the video/audio stop request to communication line disconnection in the content distribution system according to the present invention explanation will be made for. The STB 10 which desires to stop distribution of video/audio data transmits the STOP request 531 to the VoD server 20 being a content stream distribution source. At this time, the STB 10 transmits the STOP request 531 to the VoD server 20 via the RTSP proxy servers 12 and 22 (steps S121 to S123). Here, the STOP request 531 includes an identifier data on the VoD server 20 as a distribution source of content data, and the content in the VoD server 20.

More specifically, the STB 10 transmits to the RTSP proxy server 12 the STOP request 531 which specifies content data subjected to stop distribution (step S121). The RTSP proxy server 12 transmits the STOP request 531 to the RTSP proxy server 22 corresponding to an identifier of the VoD server 20 included in the STOP request 531 (step S122). At the step S122, the RTSP proxy server 12 detects the VoD server 20 as a distribution source of content data based on an RTSP protocol in response to the STOP request 531. The RTSP proxy server 22 in the internet network 200 to which the VoD server 20 belongs is then determined as a transmission destination of the STOP request 531. Similarly, the RTSP proxy server 22 detects the VoD server 20 as a transmission destination based on the RTSP protocol in response to the STOP request 531 to transmit the STOP request 531 to the VoD server 20 (step S123).

Upon receiving the STOP request 531, the VoD server 20 stops a video/audio data stream (i.e. RTP data 600) transmitted through the RTP communication path 60 (i.e. RTP distribution stop: step S124). Furthermore, after stopping RTP distribution, the VoD server 20 transmits a STOP response 532 to the STB 10 via the RTSP proxy servers 22 and 12 (steps S125 to S127).

Referring to FIG. 4B, the STB 10 which has received the STOP response 532, transmits a STEARDOWN request 541 to the VoD server 20 via the RTSP proxy servers 12 and 22 (steps S128 to S130). Here, the STEARDOWN request 541 includes identifier data on the VoD server 20 as a transmission source of the STOP response 532, content subjected to stop in the VoD server 20, and the STB 10 as a request source to stop distribution, or more precisely includes information which specifies the RTP communication path 60 subjected to disconnect.

To be more specific, the STB 10 transmits the STEARDOWN request 541 to the RTSP proxy server 12 (step S128). The RTSP proxy server 12 transmits the STEARDOWN request 541 to the RTSP proxy server 22 corresponding to an identifier of the VoD server 20 included in the STEARDOWN request 541 (step S129). At step S129, the RTSP proxy server 12 detects the VoD server 20 as a distribution source of content data based on an RTSP protocol in response to the STEARDOWN request 541. The RTSP proxy server 22 in the internet network 200 to which the VoD server 20 belongs, is then determined as a transmission destination of the STEARDOWN request 541. Similarly, the RTSP proxy server 22 detects the VoD server 20 as a transmission destination based on the RTSP protocol in response to the STEARDOWN request 541 to transmit the STEARDOWN request 541 to the VoD server 20 (step S123).

The VoD server 20 which has received the TEARDOWN request 541 prepares for disconnection of the RTP communication path 60 and transmits a TEAREDOWN response 542 to the STB 10 as a line disconnection request source (steps S131 to S139). At this time, the TEARDOWN response 542 is transmitted to the STB 10 via the RTSP proxy servers 22 and 12. The RTSP proxy servers 22 and 12 control the network control units 21 and 11 in response to the TEARDOWN response 542 and release a network band used for the RTP communication path 60 to distribute content (i.e. RTP data 600).

The operation from the steps S131 to S139 will be described below in detail. In response to the received TEARDOWN response 541, the VoD server 20 transmits the TEARDOWN response 542 to the RTSP proxy server 22 (step S131). Here, the TEARDOWN response 542 includes the network band data on the RTP communication path 60 used for transmission of content (i.e. RTP data 600).

The RTSP proxy server 22 extracts a network band data on the RTP communication path 60 included in the received TEARDOWN response 542 based on a band control protocol to transmit to the network band control unit 21 a band releasing request 551 based on the network band data (step S132). The network band control unit 21 controls a band on the internet network 200 in response to the band releasing request 551 to release a network band reserved for the RTP communication path 60 in the internet network 200 (step S133). Furthermore, after releasing the band, the network band control unit 21 transmits a band releasing response 552 to the RTSP proxy server 22 (step S134).

Upon receiving the band releasing response 552, the RTSP proxy server 22 disconnects communication with the VoD server 20 via the RTSP communication path 23, and transmits the TEARDOWN response 542 to the RTSP proxy server 12 (step S135). The RTSP proxy server 12 extracts the network band data from the received TEARDOWN response 542 based on the band control protocol to transmit a band releasing request 553 to the network band control unit 11 based on the network band data (step S136). At this time, the RTSP proxy server 12 disconnects communication with the RTSP proxy server 22 via the RTSP communication path 50 in response to the TEARDOWN response 542. The network band control unit 11 controls a band on the internet network 100 on the basis of the received band releasing request 553 to release the network band reserved on the internet network 100 for the RTP communication path 60 (step S137). Furthermore, after releasing the band, the network band control unit 11 transmits a band releasing response 554 to the RTSP proxy server 12 (step S138).

Upon receiving the band releasing response 554, the RTSP proxy server 12 transmits the TEARDOWN response 542 to the STB 10 (step S139). Upon receiving the TEARDOWN response 542, the STB 10 disconnects communication with the RTSP proxy server 12 via the RTSP communication path 13, and ends a series of reproduction controls started from the SETUP request 501.

As stated above, the content distribution system according to the present invention does not use a client terminal (i.e. STB 10 here) or a server (i.e. VoD server 20 here) to directly communicate with a network to reserve a band, without changing specifications of the client terminal and the server in a large scale even if the client terminal and the server are arranged in different networks. Even if a server is unable to deal with the SIP, it is possible to reserve a band required for content distribution as requested by the server on condition that the RTSP communication standardly used in streaming distribution is available. Furthermore, a band is reserved in response to a request from a client side, which means only a band required for streaming distribution of video data/audio data is reserved in a network. Therefore, the present invention is excellent in efficient network usage.

### (Operation of RTSP proxy server)

Operations of the RTSP proxy servers 12 and 22 will be described in detail with reference to FIG. 2. FIG. 2 is a flowchart showing an operation of receiving a request/response in the RTSP proxy servers 12 and 22. In the following description, the RTSP proxy server 12 will be used as an example, while description for the RSTP proxy server 22 is omitted since the operation of the server 22 is the same manner as that of the RTSP proxy server 12. In the following description, it should be noted that an "STB side" refers to the STB 10 side and a "VoD server side" refers to the Vod Server 20 side or the RTSP proxy server 22 side. However, in case of the RSTP proxy server 22, the "STB side" refers to the STB 10 side or the RTSP proxy server 12 side and the "VoD server side" refers to the VoD server 20 side.

The RTSP proxy server 12 receives an RTSP protocol request or response from the STB side (step S1). The RTSP proxy server 12 confirms the content of the received request or response by performing analysis through the following steps S2 to S7. More specifically, the RTSP proxy server 12 analyzes whether the content is an electronic message requesting to reserve a network band, an electronic message requesting to release a network band, or another electronic message, from data in the video/audio data reproduction control protocol relayed between the STB side and the VoD server side.

When a request/response received in the step S1 is a request necessary to reserve a band (Yes in step S2), a band reserving request is transmitted to the network band control unit 11 connected to the RTSP proxy server 12 via the band control protocol communication path (step S3). That is, the RTSP proxy server 12 transmits the band reserving request 513 to the network band control unit 11 in response to the SETUP response 502 transmitted from the VoD side. Furthermore, when an received request/response is a request necessary to release the band (No in step S2 and Yes in step S3), a band releasing request is transmitted to the network band control unit 11 connected to the RTSP proxy server 12 itself via the band control protocol communication path (step S4). That is, the RTSP proxy server 12 transmits the band releasing request 553 to the network band control unit 11 in response to the TEARDOWN response 542 transmitted from the VoD side. In the step S3 or the step S5, the RTSP proxy server 12 determines a band to reserve or release on the basis of the received bit rate data 500, and transmits the band reserving/releasing request.

When the request/response received in the step S1 is an electronic message related to another request or response, the RTSP proxy server 12 analyzes a transmission source and a transmission destination of the request/response to determine a transfer destination of the received electronic message (step S6). At this time, when the received request/response is a request/response transmitted from the VoD side (Yes in step S6), the RTSP proxy server 12 transfers this request or response to the STB side (step S7). For example, the RTSP proxy server 12 which has received the PLAY response 522 and the STOP response 532 transfers the PLAY response 522 and the STOP response 532 to the STB side.

When the request/response received in the step S1 is not a request/response transmitted from the VoD side (No in step S6), the RTSP proxy server 12 confirms whether this request/response is a response from the network band control unit (step S8). At this time, when the received request/response is a response from the network band control unit 11 (Yes in step S8), the RTSP proxy server 12 transfers a response signal corresponding to this response to the STB side. For example, when the received response is the band reserving response 514 transmitted from the network band control unit 11, the RTSP proxy server 12 transfers the SETUP response 502 corresponding to the band reserving response 514 to the STB side.

When the request/response received in the step S1 is neither any request/response from the VoD server side nor a response from the network band control unit (No in step S8), the RTSP proxy server 12 transfers the received request/response to the VoD server side (step S9). For example, the RTSP proxy server 12 receives the SETUP request 501, the PLAY request 521, the STOP request 531 or the TEARDOWN request 541 and transfers the SETUP request 501, the PLAY request 521, the STOP request 531 or the TEARDOWN request 541 to the VoD server side.

Although the flow is ended after the step S7 or S8 in FIG. 2, the RTSP proxy server 12 is made to loop to the step S1 so as to wait for a request/response again. In this case, the loop operation is desirably continued until a legitimate reason is given to disconnect the network (such as reception of the TEARDOWN response and no response from a communication counter end for a predetermined period of time).

### [Second exemplary embodiment]

### (Configuration)

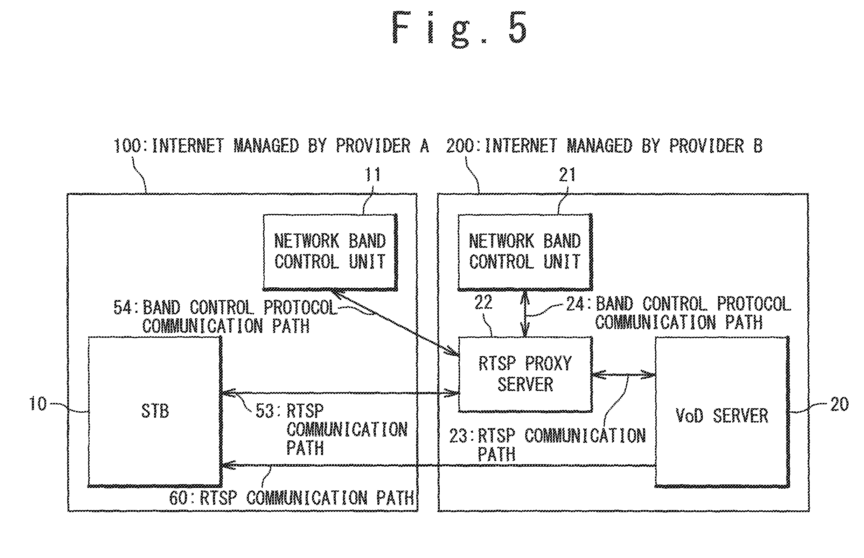

Referring to FIGS. 5 to 7, a content distribution system according to a second exemplary embodiment of the present invention will be described. Referring to FIG. 5, the content distribution system in the second exemplary embodiment has a configuration in which the RTSP proxy server 12 is not arranged in the internet network 100 and the RTSP proxy server 22 is arranged only in the internet network 200 in the configuration according to the first exemplary embodiment. That is, the second exemplary embodiment is configured to have the RTSP proxy server 22 only in the network provided with the VoD server 20. In this case, the RTSP proxy server 22 requests both of the network band control unit 11, which controls a network band on the internet network 100, and the network band control unit 21, which controls a network band on the internet network 200, to reserve/release a band. Therefore, an RTSP communication path 53 and a band control protocol communication path 54 are used to connect the RTSP proxy server 22 to the STB 10 and the network band control unit 11 respectively. Other configurations in the connection are similar to those of the first exemplary embodiment.

The description of operation of the RTSP proxy server 22 in the second exemplary embodiment will be omitted as being similar to that of the first exemplary embodiment.

### (Operations from communication connection to content distribution to communication disconnection in the content distribution system)

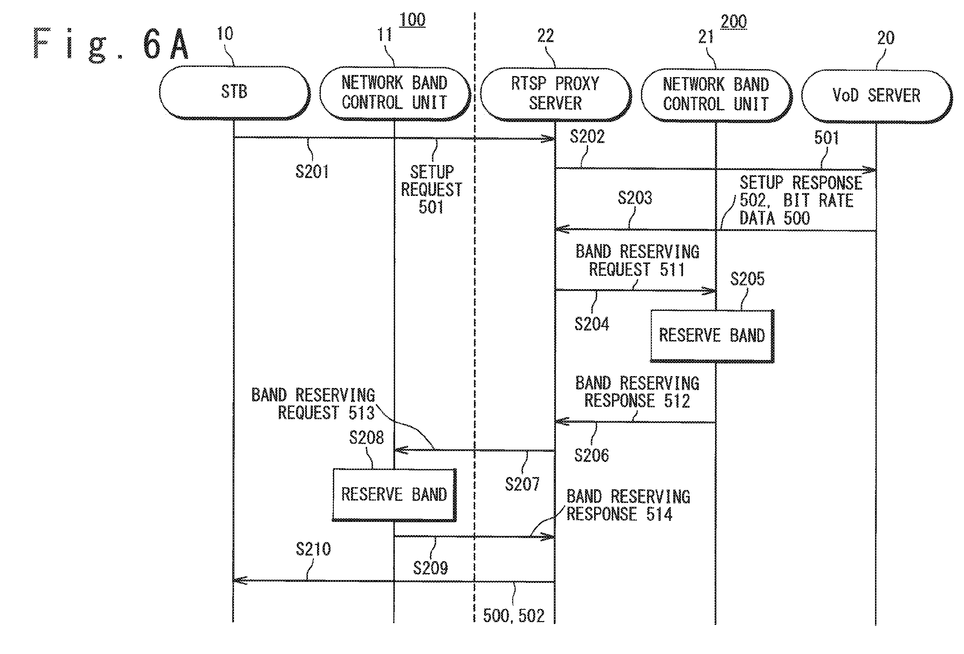

Referring to FIGS. 6A to 7, an operation in the content distribution system according to the second exemplary embodiment of the present invention will be described in detail. In the second exemplary embodiment, one RTSP proxy server 22 requests two of the network band control units 11 and 21 to reserve/release a network band for the RTP communication path 60. Referring to FIG. 6A, the STB 10 carries out a content request and transmits the SETUP request 501 to the VoD server 20 via the RSTP proxy server 22 (steps S201 and S202). In response to the received SETUP request 501, the VoD server 20 transmits the SETUP response 502 and the bit rate data 500 to the STB 10 via the RTSP proxy server 22 (steps S203 to S210).

The details of the operation from the steps S203 to S210 will be described below. In response to the received SETUP request 501, the VoD server 20 transmits the SETUP response 502 and the bit rate data 500 to the RTSP proxy server 22 (step S203). In response to the received SETUP response 502, the RTSP proxy server 22 extracts a network band data included in the bit rate data 500 based on a network band control protocol, and transmits the band reserving request 511 to the network band control unit 21 based on the network band data (step S204). The network band control unit 21 controls a band on the internet network 200 in response to the band reserving request 511, and reserves a network band for the RTP communication path 60 to transmit the RTP data 600 on the internet network 200 (step S205). After reserving the band, the network band control unit 21 transmits the band reserving response 512 to the RTSP proxy server 22 (step S206).

Upon receiving the band reserving response 512, the RTSP proxy server 22 extracts a network band data included in the bit rate data 500 based on a band control protocol, and transmits to the network band control unit 11 the band reserving request 513 based on the network band data (step S207). The network band control unit 11 controls a band on the internet network 100 based on the received band reserving request 513, and reserves a network band for the RTP communication path 60 used for transmitting the RTP data 600 on the internet network 100 (step S208). Furthermore, after reserving the band, the network band control unit 11 transmits the band reserving response 514 to the RTSP proxy server 22 (step S209).

Upon receiving the band reserving response 514, the RTSP proxy server 22 transmits the SETUP response 502 and the bit rate data 500 to the STB 10 (step S210).

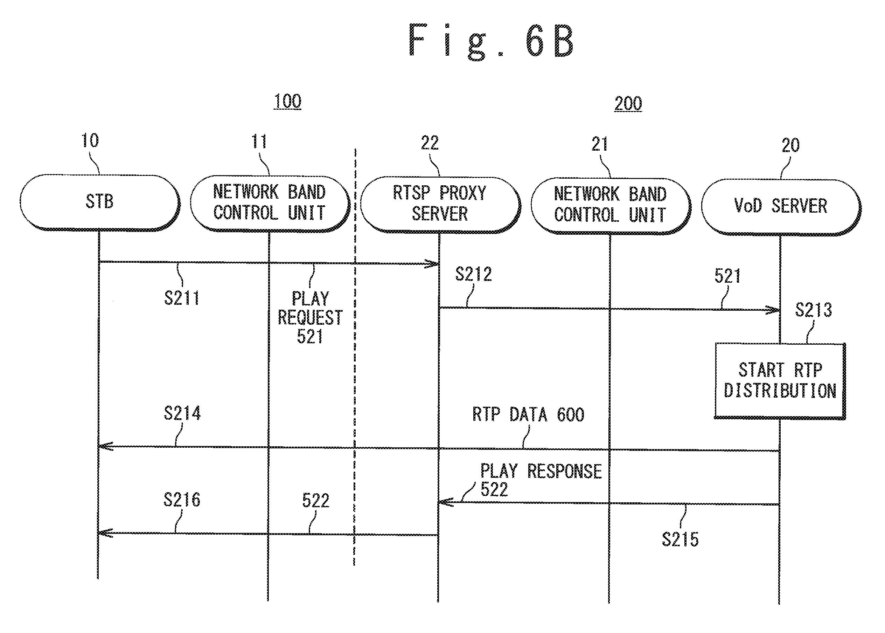

Subsequently, referring to FIG. 6B, the STB 10 confirms a band reserved for the RTP communication path 60 in response to the SETUP response 502 and transmits the PLAY request 521 to the VoD server 20 via the RTSP proxy server 22 to realize streaming reproduction of target content data (steps S211 and S212). Upon receiving the PLAY request 521, the VoD server 20 starts RTP distribution of video data/audio data of the content data specified by the PLAY request 521, using the RTP communication path 60 which has a reserved band (step S213). Thereafter, a video data/audio data stream of the content (i.e. RTP data 600) requested by the PLAY request 521 is transmitted on the RTP communication path 60 until receiving a protocol data for changing the reproduced content such as the STOP request 531, or reaching the tail end of the RTP data 600 (step S214). In starting RTP distribution, the VoD server 20 transmits the PLAY response 522 to the STB 10 via the RTSP proxy server 22 (steps S215 and S216).

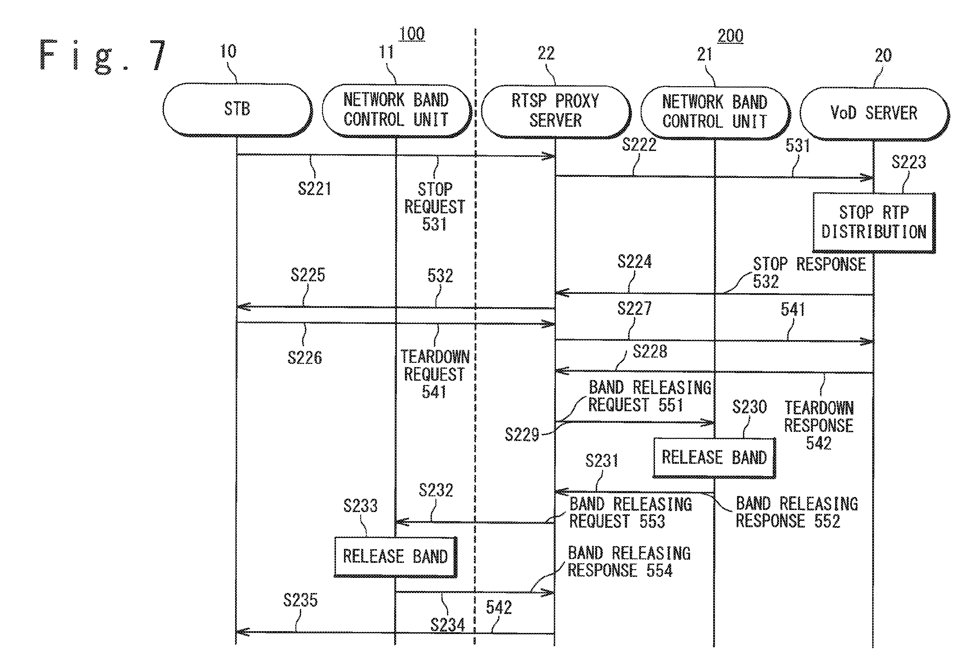

An operation from video data/audio data stop request to communication line disconnection in the content distribution system according to the present invention (in the second exemplary embodiment) referring to FIG. 7. will be Explained next The STB 10 which desires to stop video data/audio data distribution transmits the STOP request 531 to the VoD server 20 being a content stream distribution source via the RTSP proxy server 22 (steps S221 and S222). Upon receiving the STOP request 531, the VoD server 20 stops the video data/audio data stream (i.e. RTP data 600) transmitted by the RTP communication path 60 (i.e. RTP distribution stop: step S223). Furthermore, after stopping the RTP distribution, the VoD server 20 transmits the STOP response 532 to the STB 10 via the RTSP proxy server 22 (steps S224 and S225).

The STB 10 receives the STOP response 532 and transmits the STEARDOWN request 541 to the VoD server 20 via the RTSP proxy server 22 (steps S226 and S227). Upon receiving the TEARDOWN request 541, the VoD server 20 prepares for disconnection of the RTP communication path 60 and transmits the TEARDOWN response 542 to the STB 10 which is a line disconnection request source (steps S228 to S235). More specifically, the TEARDOWN response 542 is transmitted to the RTSP proxy server 22 (step S228). The RTSP proxy server 22 extracts a network band data included in the received TEARDOWN response 542 on the RTP communication path 60 based on a band control protocol to transmit the band releasing request 551 based on the network band data to the network band control unit 21 (step S229). The network band control unit 21 controls a band on the internet network 200 in response to the band releasing request 551, and releases the network band reserved on the internet network 200 for the RTP communication path 60 (step S230). After releasing the band, the network band control unit 21 transmits the band releasing response 552 to the RTSP proxy server 22 (step S231).

Upon receiving the band releasing response 552, the RTSP proxy server 22 disconnects communication with the VoD server 20 via the RTSP communication path 23. Furthermore, the RTSP proxy server 22 extracts a network band data included in the received TEARDOWN response 542 based on the band control protocol, and transmits the band releasing request 553 based on the network band data to the network band control unit 11 (step 5232). The network band control unit 11 controls a band on the internet network 100 based on the received band releasing request 553, and releases a network band reserved for the RTP communication path 60 on the internet network 100 (step S233). Furthermore, after releasing the band, the network band control unit 11 transmits the band releasing response 554 to the RTSP proxy server 22 (step S234). Upon receiving the band releasing response 554, the RTSP proxy server 22 transmits the TEARDOWN response 542 to the STB 10 (step S139). Upon receiving the TEARDOWN response 542, the STB 10disconnects communication with the RTSP proxy server 22 via the RTSP communication path 53, and ends a series of reproduction controls started from the SETUP request 501.

As stated above, even if there is no RTSP proxy server arranged in the network to which the STB 10 belongs, the RTSP proxy server 22 in the network to which the VoD server 20 belongs relays communication between the STB 10 and the VoD server 20, and controls the network control units 11 and 21 to reserve or release a network band. Therefore, it is unnecessary for the STB 10 or the VoD server 20 to directly communicate to reserve or release a network band even if no RTSP proxy server is arranged in the network to which the STB 10 belongs. Moreover, even if the STB 10 or the VoD server 20 is arranged in different networks, specifications are not changed in a large scale in the STB 10 and the VoD server 20.

### [Third Exemplary Embodiment]

### (Configuration)

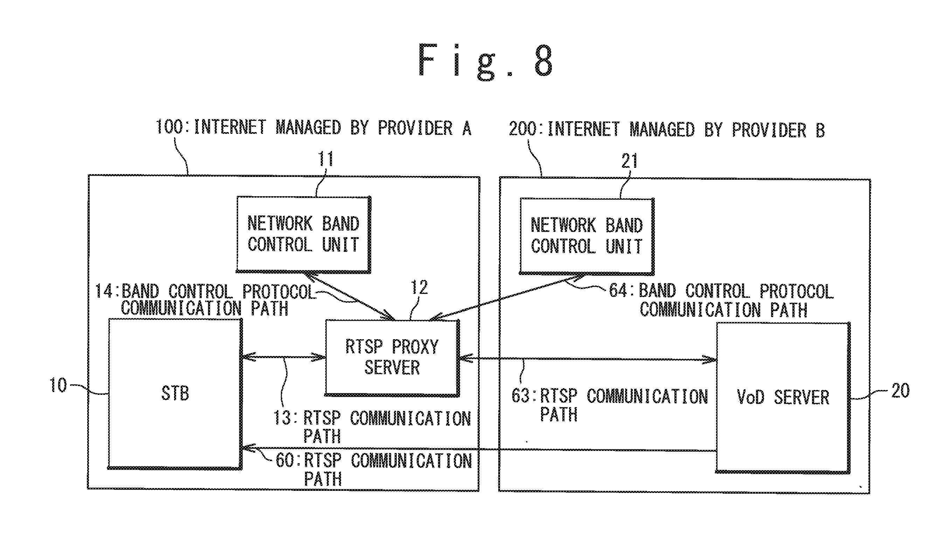

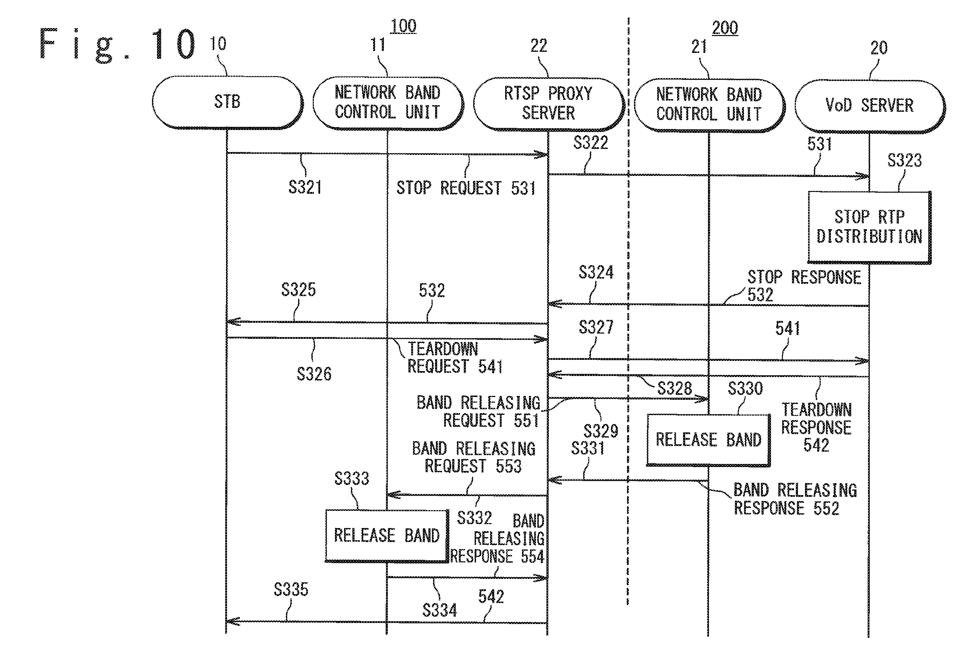

Referring to FIGS. 8 to 10, the content distribution system according to a third exemplary embodiment of the present invention will be described. Referring to FIG. 8, the content distribution system in the third exemplary embodiment has a configuration in which the RTSP proxy server 22 is not arranged in the internet network 200 and the RTSP proxy server 12 is arranged only in the internet network 100, as compared with the configuration according to the first exemplary embodiment. That is, the third exemplary embodiment is configured to have the RTSP proxy server 12 only in the network provided with the STB 10. In this case, the RTSP proxy server 12 requests both of the network band control unit 11, which controls the network band on the internet network 100, and the network band control unit 21, which controls a network band on the internet network 200, to reserve/release a band in the same manner with the second exemplary embodiment. Accordingly, an RTSP communication path 63 and a band control protocol communication path 64 are used to connect the RTSP proxy server 12 to the VoD server 20 and the network band control unit 21 respectively. Other configurations in the connection are similar to those of the first exemplary embodiment.

The description of the operation of the RTSP proxy server 12 in the third exemplary embodiment will be omitted as being similar to that of the first exemplary embodiment.

### (Operation from communication connection to content distribution to communication disconnection in the content distribution system)

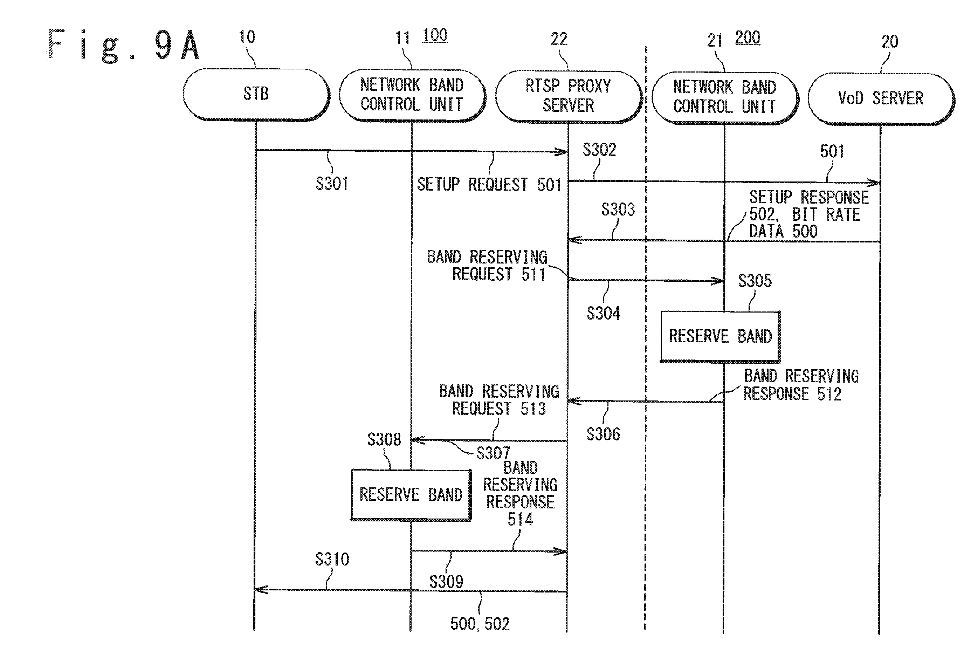

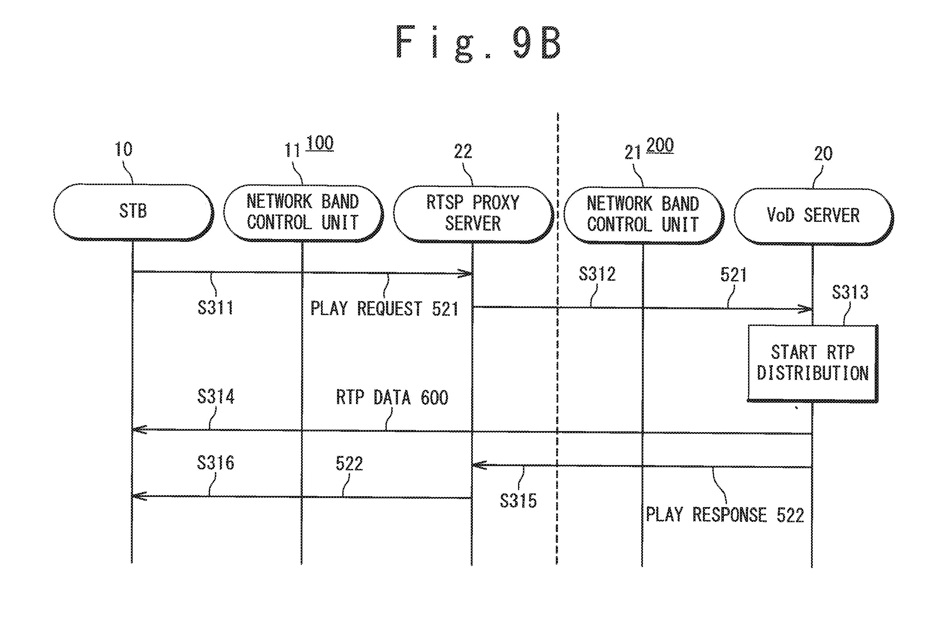

Referring to FIGS. 9A to 10, an operation of the content distribution system according to the third exemplary embodiment of the present invention will be described in detail. In the third exemplary embodiment, one RTSP proxy server 12 requests two of the network band control units 11 and 21 to reserve/release a network band for the RTP communication path 60 in the same manner as the second exemplary embodiment. Accordingly, the operations of the third exemplary embodiment (steps S301 to S335) are similar to those (steps S201 to S235) of the second exemplary embodiment respectively. However, the RTSP proxy server 22, the RTSP communication path 53 and the band control protocol communication path 54 in the second exemplary embodiment are replaced with the RTSP proxy server 12, the RTSP communication path 63 and the band control protocol communication path 64 in the third exemplary embodiment respectively.

As stated above, the STB 10 or the VoD server 20 may not communicate directly to reserve or release a network band even if the RTSP proxy server is not present in the network to which the VoD server 20 for distributing content data belongs in the third exemplary embodiment. Moreover, even in case of arranging the STB 10 or the VoD server 20 in a different network, specifications are not changed in a large scale in the STB 10 and the VoD server 20.

### [Fourth Exemplary Embodiment]

### (Configuration)

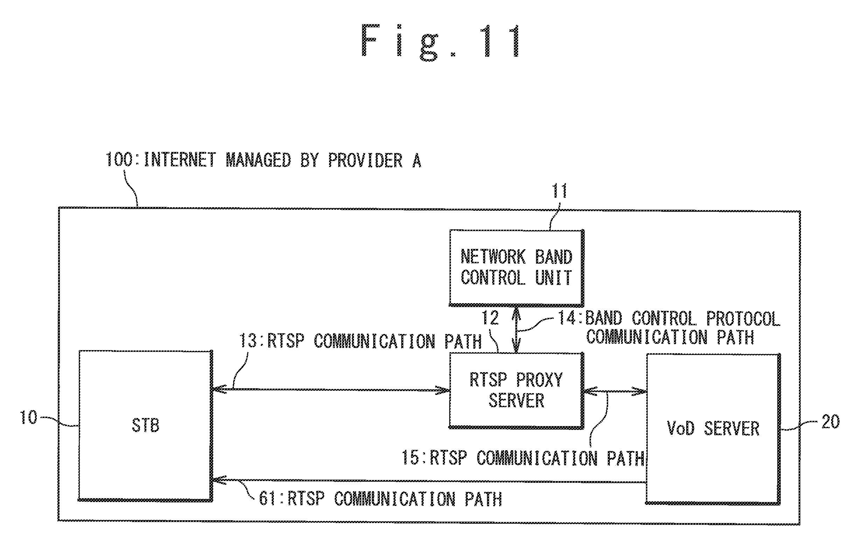

Referring to FIGS. 11 to 13, the content distribution system according to a fourth exemplary embodiment of the present invention will be described. The fourth exemplary embodiment is configured only by the single internet network 100 in place of the plurality of the internet networks present in the first exemplary embodiment. That is, the content distribution system in the fourth exemplary embodiment has a configuration in which the STB 10 and the VoD server 20 are arranged in the same internet network 100 having one each of the network band control unit 11 and the RTSP proxy server 12. In this case, the RTSP proxy server 12 requests only the network band control unit 11, which controls the network band on the internet network 100, to reserve/release a band. Accordingly, RTSP communication paths 13 and 15 are used to connect the RTSP proxy server 12 to the STB 10 and the VoD server 20 respectively, while using a band control protocol communication path 14 to connect the RTSP proxy server 12 to the network band control unit 11, and using an RTP communication path 61 for transmitting the RTP data 600 to connect the STB 10 and the VoD server 20. It should be noted that the RTP communication path 61 is configured in the same network (i.e. internet network 100 here).

The description of an operation of the RTSP proxy server 12 in the fourth exemplary embodiment will be omitted as being similar to that of the first exemplary embodiment.

### (Operation from communication connection to content distribution to communication disconnection in the content distribution system)

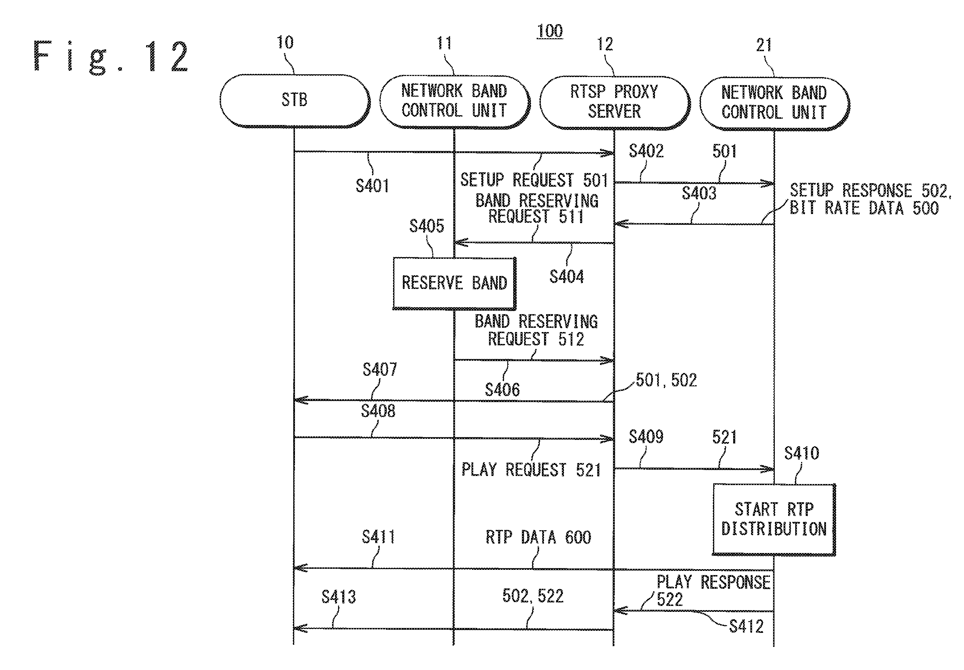

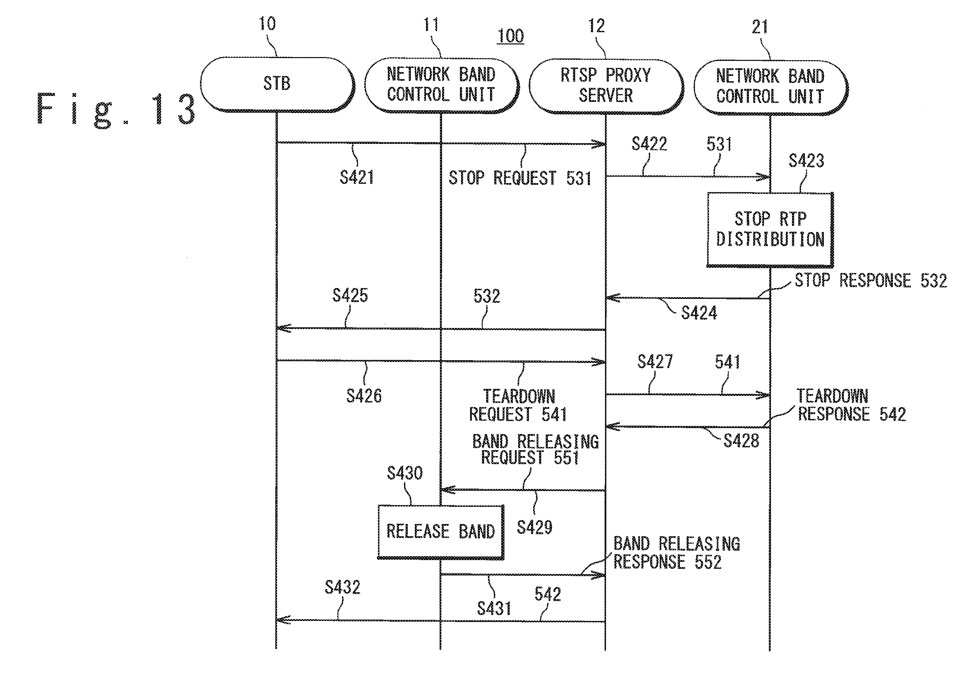

Referring to FIGS. 12 and 13, the content distribution system according to the fourth exemplary embodiment of the present invention will be described in detail. In the fourth exemplary embodiment, one RTSP proxy server 12 requests one network band control unit 11 to reserve/release a network band for the RTP communication path 60. Accordingly, the operations of the fourth exemplary embodiment (i.e. steps S401 to S432) are similar to those obtained by removing the steps S204 to S206 and the steps S229 to S231 from the operations of the second exemplary embodiment (i.e. steps S201 to S235). However, the RTSP proxy server 22, the RTSP communication path 53, the band control protocol communication path 54 and the RTP communication path 60 in the second exemplary embodiment are replaced with the RTSP proxy server 12, the RTSP communication path 13, the band control protocol communication path 14 and the RTP communication path 63 in the fourth exemplary embodiment, respectively.

As stated above, according to the fourth exemplary embodiment, it is possible for the RTSP proxy server 12 to relay communication related to reserving/releasing a network band between the STB 10 and the VoD server 20, and control the network band control unit 11 to reserve/release a network band even in the same network.

### [Fifth Exemplary Embodiment]

### (Configuration)

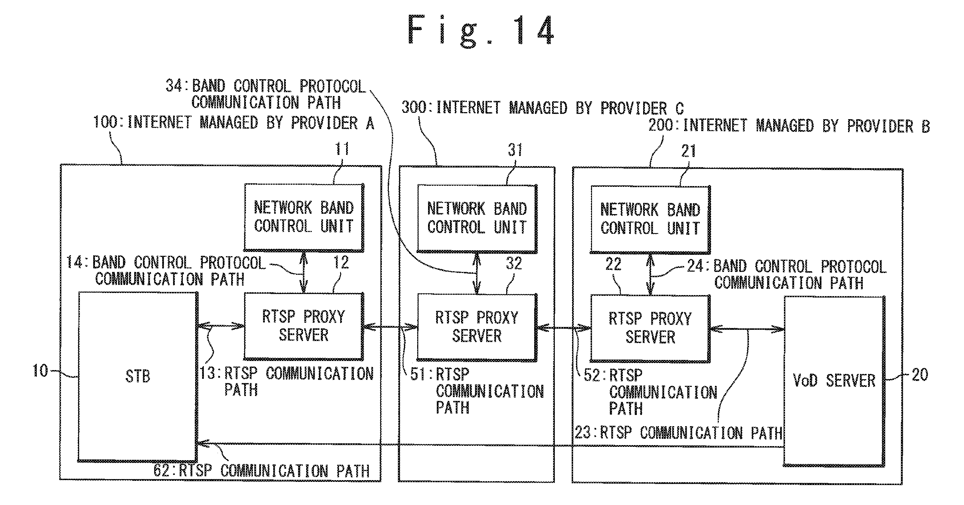

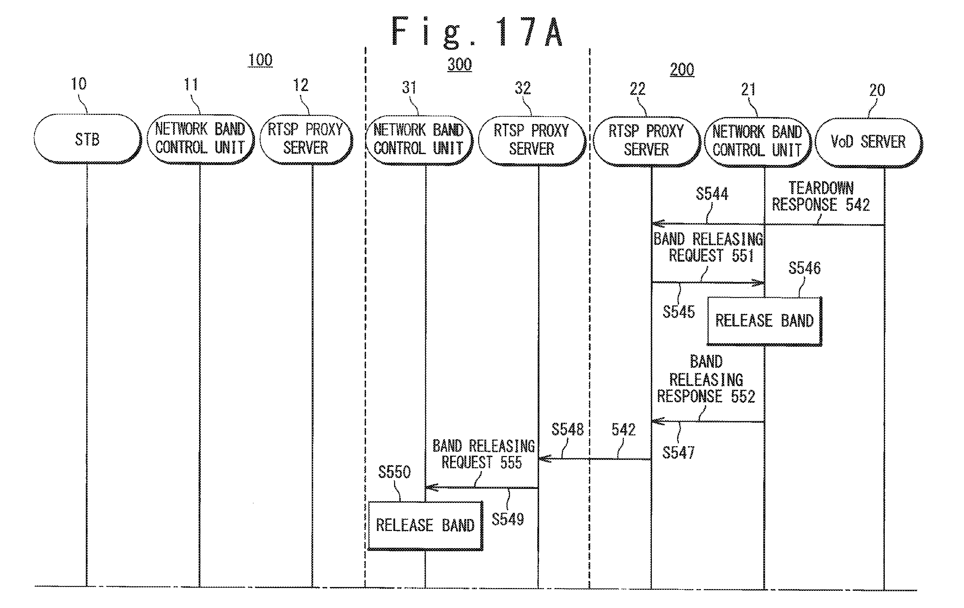

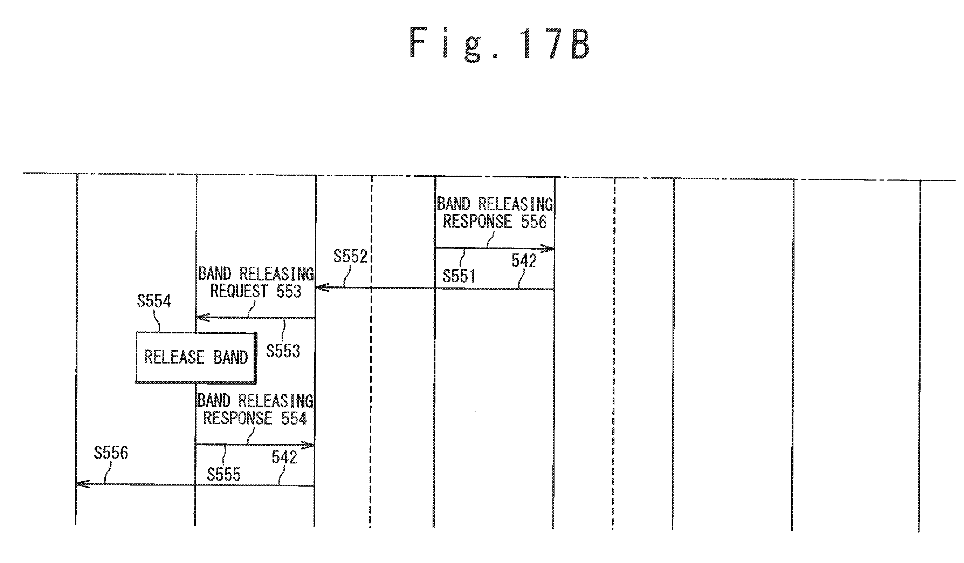

Referring to FIGS. 14 to 17B, the content distribution system according to a fifth exemplary embodiment of the present invention will be described. Referring to FIG. 14, the content distribution system in the fifth exemplary embodiment is further provided with another internet network (e.g. internet network 300 managed by a provider C) between the STB 10 and the VoD server 20 in the configuration according to the first exemplary embodiment. Here, the internet network 300 managed by the provider C (to be referred to as the internet network 300, hereinafter) includes a network band control unit 31 which controls a network band on the internet network 300, and an RTSP proxy server 32 which relays RTSP communication between the RTSP proxy servers 12 and 22 and controls the network band control unit 31. That is, the RTSP proxy servers 12, 22 and 32 relay RTSP communication between the STB 10 and the VoD server, and control the network band control units 11, 21 and 31 in the networks to which the RTSP proxy servers 12, 22 and 32 belong respectively so as to reserve or release a network band for an RTP communication path 62 in the networks (i.e. internet networks 100, 200 and 300). Accordingly, RTSP communication paths 51 and 52 are connected with the RTSP proxy server 32 to the RTSP servers 12 and 21, respectively, while the RTP communication path 62 provided for communication of the RTP data 600 is used to connect the STB 10 and the VoD server 20. Other configurations in the connection are similar to those of the first exemplary embodiment.

The description of operations of the RTSP proxy server 32 in the fifth exemplary embodiment will be omitted as being similar to those of the RTSP proxy server 12 in the first exemplary embodiment. (Operations from communication connection to content distribution to communication disconnection in the content distribution system)

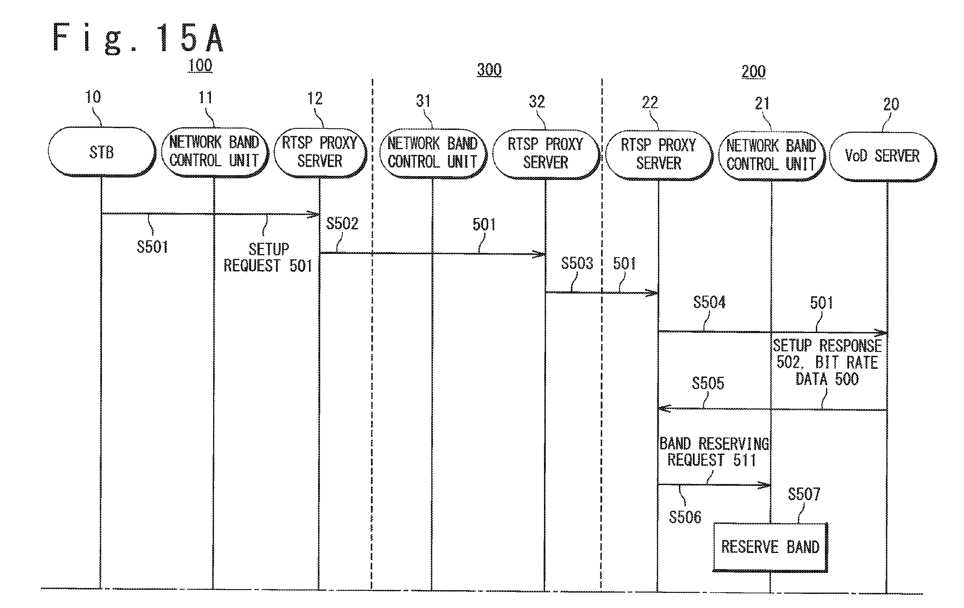

Referring to FIGS. 15A to 17B, operations of the content distribution system according to the fifth exemplary embodiment of the present invention will be described in detail. The STB 10 in the fifth exemplary embodiment receives content distribution from the VoD server 20 in the internet network 200 which differs from the internet network 100 to which the STB 10 belongs, in the same manner as the first exemplary embodiment. The STB 10 in the fifth exemplary embodiment receives content distribution via the other internet network 300. Therefore, an operation to reserve a network band for the RTP communication path 62 (i.e. steps S501 to S517) are provided by adding to an operation similar to the communication connection operation in the first exemplary embodiment (i.e. steps S101 to S112), an operation of relaying RTSP communication between the STB 10 and the VoD server by the RTP proxy server 32 (i.e. steps S503, S510 and S513), and an operation of reserving a network band for the RTP communication path 62 in the internet network 300 (i.e. steps S510 to S512).

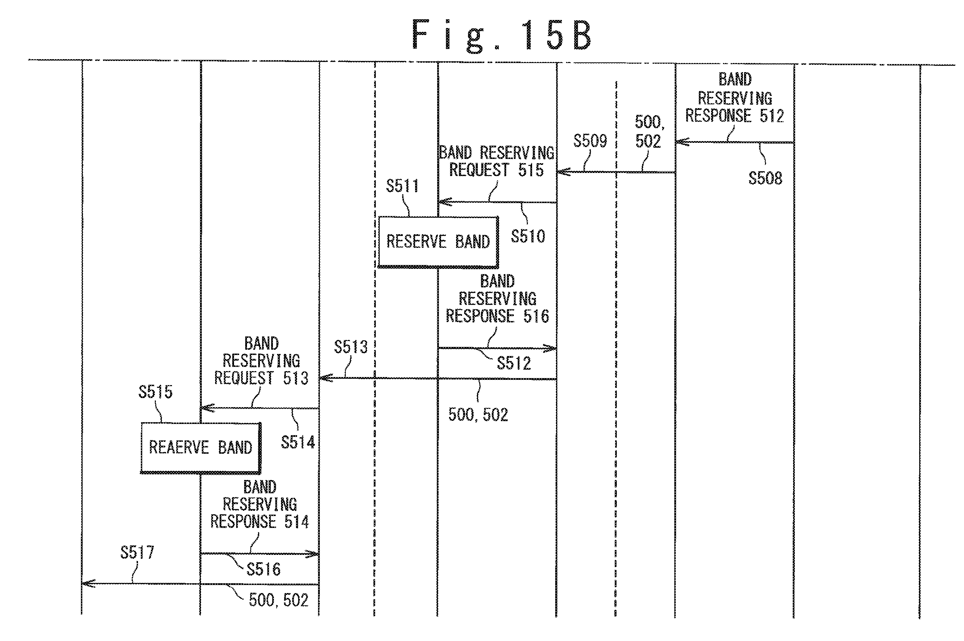

Operations which differ from those of the first exemplary embodiment will be described below. Referring to FIG. 15A, the STB 10 transmits the SETUP request 501 to the VoD server 20 via the RTSP proxy servers 12, 32 and 22 (steps S501 to S504). Furthermore, referring to FIG. 15B, the VoD server 20 transmits the SETUP response 502 to the STEUP request 501 and the bit rate data 500 to the STB 10 via the RTSP proxy servers 22, 32 and 11 (steps S508 to S517). At this time, the RTSP proxy server 32 receives the SETUP response 502 and the bit rate data 500 and controls the network band control unit 31 so as to release a network band for the RTP communication path 62 on the internet network 300 (steps S510 to S512).

The RTSP proxy servers 12, 22 and 32 are thus capable of relaying RTSP communication between the STB 10 and the VoD server and reserving the network band on the internet networks 100, 200 and 300 to which the RTSP proxy servers 12, 22 and 32 belong, respectively.

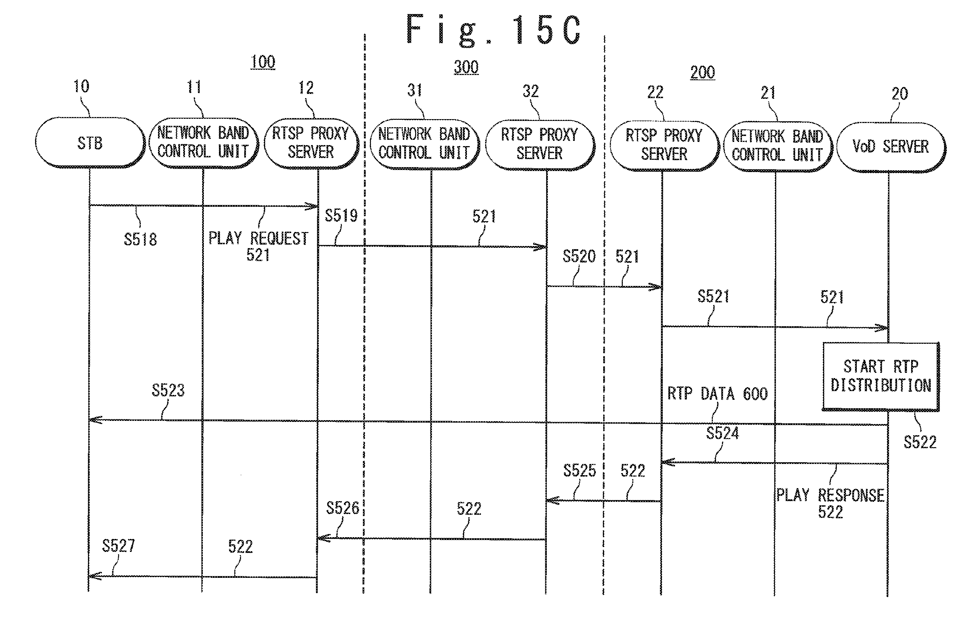

Referring to FIG. 15C, an operation to distribute content (i.e. RTP data 600) in the fifth exemplary embodiment (steps S518 to S527) is provided by adding to an operation similar to that of the first exemplary embodiment (steps S113 to S120), an operation of relaying RTSP communication between the STB 10 and the VoD server by the RTP proxy server 32 (steps S520 and S526). That is, the STB 10 transmits the PLAY request 521 to the VoD server 20 via the RTSP proxy servers 12, 32 and 22 (steps S518 to S521). Furthermore, the VoD server 20 transmits the PLAY response 522 to the PLAY request 521 to the STB 10 via the RTSP proxy servers 22, 32 and 11 (steps S524 to S527).

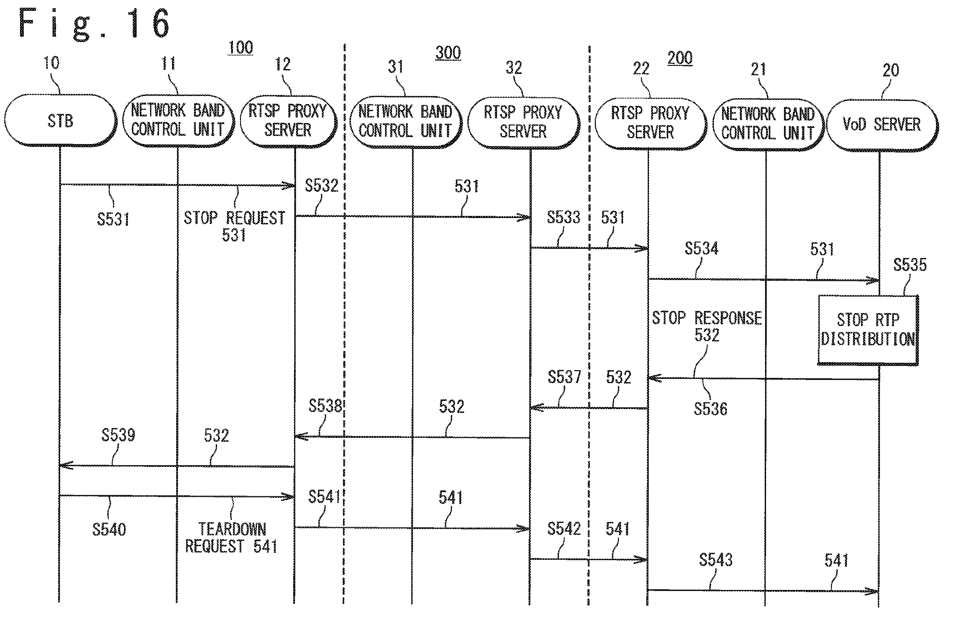

Referring to FIGS. 16 to 17B, an operation to stop distribution of content (i.e. RTP data 600) in the fifth exemplary embodiment (steps S531 to S556) is provided by adding to an operation similar to that of the first exemplary embodiment (steps S121 to S139), an operation of relaying RTSP communication between the STB 10 and the VOD server by the RTP proxy server 32 (steps S533, S538 and S552), and an operation of releasing a network band reserved for the RTP communication path 62 on the internet network 300 (steps S549 to S551).

The STB 10 transmits the STOP request 531 to the VoD server 20 via the RTSP proxy servers 12, 32 and 22 (steps S531 to S534). Furthermore, the VoD server 20 transmits the STOP response 532 for the STOP request 531 to the STB 10 via the RTSP proxy servers 22, 32 and 11 (steps S536 to S539). Furthermore, the STB 10 transmits the TEARDOWN request 541 to the VoD server 20 via the RTSP proxy servers 12, 32 and 22 (steps S540 to S543). Furthermore, the VoD server 20 transmits the TEARDOWN response 542 for the TEARDOWN request 541 to the STB 10 via the RTSP proxy servers 22, 32 and 11 (steps S544 to S556). At this time, the RTSP proxy server 32 receives the TEARDOWN response 542 and controls the network band control unit 31 to release the network band reserved for the RTP communication path 62 on the internet network 300 (steps S549 to S551).

As stated above, even if the number of networks on a content data communication path (i.e. RTP communication path 62) is increased, the RTSP proxy server 22 arranged in the added network (i.e. internet network 300 here) is used to relay RTSP communication and control a band therein. Therefore, it is unnecessary for the STB 10 or the VoD server 20 to directly communicate to reserve or release a network band. Moreover, even if the STB 10 or the VoD server 20 is arranged in a different network, specifications are not changed in a large scale in the STB 10 or the VoD server 20.

The present invention may have another specific configuration without being limited to the first to fifth exemplary embodiments described above in detail, and changes made in a range without deviating from the scope of the present invention are also included in the present invention. Providers used in the above exemplary embodiments are simply different by the internet network 100 managed by a provider A, the internet network 200 managed by a provider B, and the internet network 300 managed by a provider C, as an example, but more than one internet networks may be owned by a single provider. Each of the internet networks may be different by a provider referring to the number of subscribers who subscribe each network and in association with firewall setting for company users or the like.

Furthermore, a NAT or NAPT router may be arranged in front of and behind each of the RTSP proxy servers. In this case, each of the RTSP proxy servers operates by converting a communication address (or address and port) included in an RTSP protocol to an address (or address and port) obtained before NAT (or NAPT) conversion.

Referring to FIGS. 8 to 10, an example of the conversion will be described below by using the content distribution system configured according to the third exemplary embodiment. It is assumed here that the NAT router is present in the RTSP communication path 13. Furthermore, the description will be made on an assumption that the STB 10 has the local address of 192.168.1.1 in the NAT router and the global address of 10.10.10.200 on the outside of the NAT router, while the VoD server 20 has the local address of 192.168.1.250 in the NAT router and the global address of 10.10.10.250 on the outside of the NAT. In addition, the STB 10 is assumed to obtain the global address of the VoD server 20 and an identifier of content which is desired to be reproduced, from a portal server prior to transmission of the SETUP request 501 at the step S301. Furthermore, it is assumed that a correspondence between the local address and the global address before and after the NAT conversion can be obtained by asking the network band control unit 11 in case of conversion by the NAT router in the internet network 100.

In response to the SETUP request 501 is transmitted from the STB 10 to the RTSP proxy server 12, the following RTSP message is transmitted. In this example, "destination" described in the transport field contains a value which specifies the STB 10 as a transmission destination of content of the VoD server 20. The STB 10 describes a transmission destination address of the STB itself by the local address in the NAT router because the type of the global address distributed by the NAT router is unknown.
SETUP rtsp://10.10.10.202:554/1 RTSP/1.0
CSeq: 4
Transport: RTP/AVP/UDP; unicast; destination = 192.168.1.1; client_port = 19000

The RTSP proxy server 12 is connected to the STB 10 by TCP in receiving the SETUP request 501 and recognizes the global address of the STB connected by a SOCKET interface for use in the TCP connection to replace the address described in "destination" transmitted by the SETUP request 501 with the global address recognized by the SOCKET interface. The replaced RTSP message is transmitted to the VoD server 20 as the SETUP request 501. The RTSP message obtained at this time is as shown below:
SETUP rtsp://10.10.10.202.554/1 RTSP/1.0
CSeq: 4
Transport: RTP/AVP/UDP; unicast; destination = 10.10.10.200; client_port = 19000

Upon receiving the SETUP request 501, the VoD server 20 includes a transmission source address and a port of a video/audio data stream transmitted from the server itself in the SETUP response 502 so as to transmit to the RTSP proxy server 12. Shown below is the SETUP response 502. An address described in "Source" here is the global address of the VoD server 20 as a transmission source.
RTSP/1.0 200 OK
CSeq: 4
Session: 1796-35902448
Transport: RTP/AVP/UDP; unicast; desitnaiton = 10.10.10.250; source = 10.10.10.202; client_port = 19000; server_port = 3590; bitrate = 8545088
Public: OPTIONS, DESCRIBE, SETUP, PLAY, PAUSE, GET_PARAMTER, GET_DATA, TEARDOWN
VersionSupport: NEC/1.0

Upon receiving the SETUP response 502 and the bit rate data 500, the RTSP proxy server 12 specifies a "bitrate" value included in the SETUP response 502 and the bit rate data 500 as a band value to reserve a band for the RTP communication path 60 used in RTP communication on the internet network 200, and simultaneously specifies a combination of specific addresses and ports so as to transmit the band reserving request 511 to the network band control unit 21. The combination of addresses and ports at this time includes the global address (10.10.10.202) and the port (3590) of the VoD server 20 serving as a transmission source, and the global address (10.10.10.250) and the port (19000) of the STB 10 serving as a transmission destination.

The network band control unit 21 reserves a network band on the internet network 200 in response to the content of the band reserving request 511 so as to transmit the band reserving response 512 to the RTSP proxy server 12.

To reserve the network band on the internet network 100, upon receiving the band reserving response 512, the RTSP proxy server 12 specifies as a band value, the "bitrate" value included in SETUP response 502 and the bit rate data 500 received beforehand, and simultaneously specifies a combination of specific addresses and ports so as to transmit the band reserving request 513 to the network band control unit 11. The combination of addresses and ports at this time includes the global address (10.10.10.202) and the port (3590) of the VoD server 20 serving as a transmission source, and the local address (192.168.1.1) and the port (19000) of the STB 10 serving as a transmission destination. This combination of specified addresses may also include the global address (10.10.10.250) for the network on the STB side and the local address (192.168.1.250) for the network on the VoD server side, depending on the NAT router and the network band control unit 11 to be mounted.

The network band control unit 11 reserves the network band on the internet network 100 in response to the content of the band reserving request 513 so as to transmit the band reserving response 514 to the RTSP proxy server 12.

Upon receiving the band reserving response 514, the RTSP proxy server 12 converts the global address of the VoD server 20, which is included in the SETUP response 502 and the bit rate data 500, to the aforementioned local address in the NAT router in the internet network 100. The conversion is executed from a corresponding relationship between the local address and the global address in the inside and outside of NAT by inquiring the network band control unit 11. Next, the RTSP proxy server 12 uses the converted value. The converted RTSP message is transmitted to the STB 10 as the STEUP response 502 and the bit rate data 500. Shown below are the SETUP response 502 and the bit rate data 500. A value in "source" here is converted to the local address of the VoD server 20 in the NAT router.
RTSP/1.0 200 OK
CSeq: 4
Session: 1796-35902448
Transport: RTP/AVP/UDP; unicast; destination = 192.168.1.1; source = 192.168.1.250; client_port = 19000; server_port = 3590; bitrate = 8545088
Public: OPTIONS, DESCRIBE, SETUP, PLAY, PAUSE, GET_PARAMTER, GET_DATA, TEARDOWN
VersionSupport: NEC/1.0

Upon receiving the SETUP response 502 and the bit rate data 500, the STB 10 executes a process of receiving a video/audio data stream (i.e. in RTP protocol) transmitted from the "source" address and "service_port" port number described therein by using the "destination" address and "client_port" address.

The NAT conversion example in communication connection is as described above. In a band releasing operation starting from the TEARDOWN request 541, a combination of respective addresses and ports of the STB 10 and the VoD server 20 used in reserving the above band starting from the SETUP response 502 may be used to instruct the release of the band. Furthermore, when a NAPT router is used in place of the NAT router, it is obvious to add a port conversion process to an address conversion process in the similar method.

Furthermore, in the configuration shown in the third exemplary embodiment, not only the VoD server 20 but also any VoD servers may be desired by the STB 10 for reproduction, which means that the RTSP proxy server 12 does not always know the address of the network band control unit 21 from the beginning. In such a case, a method may be employed to obtain a corresponding relationship between the VoD server 20 and the network band control unit 21 by using a directory service such as a DNS server. Described below will be an example of a method to solve the address of the network band control unit 21 in the case of using a DNS server.

The DNS server realizes a relationship between the VoD server and the network band control unit 21 by using a following corresponding table. It is assumed here that the VoD server 20 has an address expressed in an FQDN format as "hi-mpeg-server.com" and an IP address expressed as "10.10.10.202", while the network band control unit 21 has an address in the FQDN format as "hi-mpeg-server.com.racs" and an IP address expressed as "10.20.3.81".

The table stores following address relationships:
hi-mpeg-server.com
hi-mpeg-server.com.racs

Firstly, the RTSP proxy server 12 is used to obtain the FQDN format address expressed as "hi-mpeg-server.com" with respect to the IP address "10.10.10.202" of the VoD server 20 from the DNS server. Next, ".racs" is added to the FQDN address expressed as "hi-mpeg-server.com" so as to obtain "hi-mpeg-server.com.racs". This "hi-mpeg-server.com.racs" is equal to the FQDN format address expression of the network band control unit 21. Next, the IP address expressed as "10.20.3.81" with respect to the FQDN format address of the network band control unit 21 expressed as "hi-mpeg-server.com.racs" is obtained from the DNS server. The IP address thus obtained is used to transmit the band reserving request 511 or the like to the network band control unit 21.

The aforementioned method converts the IP address of the VoD server 20 to the FQDN format for once and further adds fixed ending (i.e. ".racs" in the above example) to the FQDN format so as to set the network band control unit 21 in the FQDN format corresponding to the VoD server 20, whereby a corresponding relationship between each VoD server and the network band control unit in the internet network 200 operated by the provider B can be easily set and obtained by using only a standard DNS server.

As stated above, the present invention makes a control for reserving a band only by the RTSP proxy server without requiring complicated band control procedures. Furthermore, band control is also carried out based on a protocol (i.e. RTSP protocol here) widely used in the existing streaming reproduction control, so that a device which controls a band does not need to know a special protocol and message. Moreover, the RTSP proxy server which relays RTSP communication makes a band control in a network, thereby allowing a client terminal and a server to use an existing protocol and interface. Furthermore, a band to be reserved is determined according to a streaming distribution request, which allows a band corresponding to the actually transferred content data to be reserved without reserving a redundant band.

## Claims

1. A content distribution system comprising:
a client terminal;
a server;
a band control mediating unit provided between said client terminal and said server, and configured to relay a reproduction control protocol data of a content data from said client terminal to said server; and
a first band control unit arranged in a first network and configured to control a band on said first network,
wherein said band control mediating unit requests said first band control unit to control the band on said first network for a communication path, through which the content data is transferred, based on the reproduction control protocol data.

2. The content distribution system according to claim 1, wherein said server transmits a network band data necessary for transferring the content data to said client terminal via said band control mediating unit in response to a content data transfer request, and
said band control mediating unit controls said first band control unit to determine a width of the band based on the network band data.

3. The content distribution system according to claim 1 or 2, wherein said band control mediating unit is arranged in said first network.

4. The content distribution system according to any of claims 1 to 3, further comprising:
a second band control unit provided in a second network and configured to perform a band control in said second network,
wherein said band control mediating unit requests said second band control unit to perform the band control of a communication path through which content data is transferred in said second network, based on the reproduction control protocol data.

5. The content distribution system according to any of claims 1 to 4, wherein the reproduction control protocol is RTSP (Realtime Transport Protocol) protocol, and
the content data is transferred from said server to said client terminal through said communication path based on the RTP.

6. A band control mediating apparatus comprising:
an I/O interface arranged between a client terminal and a server and configured to relay a reproduction control protocol data of a content data from said client terminal to the server; and
a CPU configured to analyze the reproduction control protocol data to determine a band for a communication path through which the content data is transferred,
wherein said CPU transmits a request for a band control based on the determined band, via said I/O interface to a first band control unit which performs a band control in a first network.

7. The band control mediating apparatus according to claim 6, wherein said CPU analyzes a network band data required to transfer the content data, in response to a content data transmission request to determine a band.

8. The band control mediating appratus according to claim 6 or 7, wherein said CUP analyzes a network band data required to transfer the content data in response to the content data transfer request, to specify a network for the communication path through which the content data is transferred.

9. The band control mediating apparatus according to any of claims 6 to 8, wherein said CPU transmits a band control request to a second band control unit which performs a band control in a second network.

10. The band control mediating apparatus according to any of claims 6 to 9, wherein the reproduction control protocol is RTSP (Realtime Streaming Protocol) protocol, and
the content data is transferred from said server to said client terminal through said communication path based on the RTP.

11. A band control method comprising:
a band control mediating unit arranged between a client terminal and a server, relaying a reproduction control protocol data of a content data from the client terminal to the server;
the band control mediating unit analyzing the reproduction control protocol data and determining a band for a communication path through which the content data is transferred; and
the band control mediating unit transmitting a band control request for the determined band to a first band control unit which controls the band in the first network.

12. The band control method according to claim 11, wherein said determining comprises:
determining a band by analyzing network band data required to transfer content data which has been transmitted with a response to the content data transfer request.

13. The band control method according to claim 11 or 12, wherein said transmitting comprises:
analyzing a network band data required to transfer the content data in response to the content data transfer request to specify a network for the communication path through which the content data is transferred.

14. The band control method according to any of claims 11 to 13, further comprising:
the band control mediating unit transmitting the band control request with respect to the second band control unit which performs the band control of the second network.

15. The band control method according to any of claims 11 to 14, wherein the reproduction control protocol is RTSP (Realtime Streaming Protocol) protocol, and
the content data is transferred from said server to said client terminal through said communication path based on the RTP.

16. The band control method according to any of claims 11 to 15, further comprising:
the first band control unit reserving the band for the communication path through which the content data is transferred in the first network, in response to the band control request.

17. The band control method according to claim 16, further comprising:
the first band control unit releasing the band reserved for the communication path through which the content data is transferred, in response to the band control request.
